# EUROPEAN PATENT SPECIFICATION

(11) **EP 0 697 335 B1**
(45) Date of publication and mention of the grant of the patent: **28.07.1999**
(21) Application number: 94306057.4
(22) Date of filing: 17.08.1994
(51) Int. Cl.: B64D 1/18, H02G 1/02

(54) **Hydro service system assembly**
Hydrobehandlungssystem
Système pour traitement hydraulique

(43) Date of publication of application: 21.02.1996
(73) Proprietor: McLean, Ian, Edmonton, Alberta T5M 3X4 (CA); Jodoin, Raymond, Edmonton, Alberta T5M 3X4 (CA)
(72) Inventor: McLean, Ian, Edmonton, Alberta T5M 3X4 (CA); Jodoin, Raymond, Edmonton, Alberta T5M 3X4 (CA)
(74) Representative: Howick, Nicholas Keith

(56) References cited:
- GB-A- 2 261 772
- JP-A- 2 068 297
- US-A- 3 494 423
- US-A- 4 477 289
- US-A- 4 637 575
- US-A- 4 971 082

## Description

### BACKGROUND OF THE INVENTION

### Technical Field

This invention is directed to a hydro service system and more particularly to a multipurpose maintenance, repair and cleaning apparatus designed to be mounted on a helicopter. In one embodiment, the apparatus is used for the cleaning of insulators on energized high voltage transmission lines, and in another embodiment the apparatus is used as an aerial platform on which a spotter may be seated to do detailed inspections or repair of high voltage transmission lines.

### Background Art

It is known that various contaminants may become attached to insulators on high voltage transmission lines, and if these contaminants are allowed to build up, this may cause the insulator to flash over, causing power outages and/or physical damage to the high voltage transmission lines. It is known that insulators can be cleaned by taking the transmission lines out of service and cleaning them by hand.

It is also known that the insulators may be cleaned more efficiently by directing a stream of cleaning fluid under pressure, generally water, onto the insulator, to remove any dirt or foreign objects which have become attached to the insulator. Generally, this cleaning process is done by a bucket truck or other ground based pumping system. This is inefficient, as insulators are generally located well above the ground and are difficult to reach. As well, they are often located on terrain that is inaccessible to ground based vehicles.

It is further known that an external platform made of electrically conducting material may be mounted to the landing skids of a helicopter so that all parts of the helicopter are of the same electrical potential. This platform may then be used as a repair platform for the repair and maintenance of high voltage transmission lines. However, such platforms are generally used for repair purposes.

U.S. Patent No. 4,477,289 (Kurtgis), describes an apparatus to be mounted on a helicopter for cleaning insulators fitted to pylons carrying electric power lines. The apparatus includes a work platform attached to a helicopter, a boom assembly on one side of the platform, and a pump on the other side of the platform for balancing the weight of the load. The boom is made of a pressure hose covered with polystyrene and epoxy carbon. The boom described in Kurtgis can be used strictly for washing powerlines and insulators. It does not form part of an integrated power line work station. It does not use an articulated spray nozzle to allow for insulators to be pressure washed from beneath, instead relying on water pressure to bank the cleaning solution to clean the underside of certain types of insulators. However there is no common ground provided between the boom and the helicopter. The Kurtgis apparatus can not be used for repairs.

U.S. Patent No. 4,637,575 (Yenzer) discloses an airborne work platform attached across the skids of a helicopter, having a workman supporting portion at one end, and a ballast at the opposite end for balancing the platform. This design allows for maintenance and inspection. There are no cleaning capabilities provided. The apparatus described in Yenzer is a one purpose design, a platform which may be used for maintenance and service of power lines.

Great Britian Patent No. 2,261,772 (Kramer), describes a method of washing insulators from an airborne platform using a boom assembly. The boom is constructed of formed polystyrene covered with a layer of epoxy carbon to prevent the transmission of electrical power while the boom is in use. This appears to require an extraordinarily long boom to be used in this design to effect cleaning of lines and insulators while preventing flash-over.

### SUMMARY OF THE INVENTION

It is an object of the present invention to provide a work platform which supports the fluid cannon in a manner which does not create instabilities for the transportation device, particularly, which does not create flight instabilities for a helicopter.

It is another object of the present invention to provide an airborne fluid cannon for the economic and rapid cleaning of insulators on high voltage transmission lines. It is still another object of the present invention to provide a system with a modular design. Thus, the cannon is easily removable. When removed, a wing may be readily attached to the work platform which may be used as an aerial platform to conduct servicing and repairs on high voltage transmission lines. The interchangeable aspects of the system of the present invention allow for the repair and/or maintenance of high voltage transmission lines, or the cleaning of insulators, at any location and at any height off the ground. As a helicopter is more manoeuvrable and faster than ground based equipment, cleaning and repair of high voltage transmission lines may be made more efficiently.

Accordingly, the present invention provides for a multipurpose repair and maintenance apparatus for aerial inspection, repair and controllable delivery of a stream of cleaning fluid to a workpiece for cleaning, comprising a work platform defining a starboard side and a port side, for attachment on the skids of an helicopter; support means provided on the port side of the work platform for rotatably receiving a boom assembly on the work platform; power drive mounting means provided on the starboard side of the work platform for detachably fixing a pumping means on the work platform; and means for removably fixing the work platform to the skids of the helicopter such that the loads on the work platform are fully balanced; and means for removably attaching an external wing to the port side of the work platform.

The work platform of the apparatus according to this invention, is made of electrically conductive material and has all electrically conductive parts of the boom assembly, the power drive mounting means, the pumping means, the fluid circuit and the means for removably fixing connected to the electrically conductive parts of the helicopter to have the same electrical potential.

According to a preferred embodiment of the invention, there is provided a boom assembly extending from the work platform for supporting and directing a fluid circuit fixing pumping means and a conduit with a nozzle.

An advantage of the present invention is the use of an extension piece and a wing/assembly for supporting a person for inspections and/or repairs. The work platform becomes part of a fully integrated maintenance and washing system.

Advantageously, the conduit is mounted within the boom assembly. An operator may control the position of the boom assembly by moving it both horizontally and vertically, the range of motion being ninety degrees horizontally and forty degrees vertically. A nozzle control means may control the angle of the nozzle such that the fluid stream is precisely directed at the target. The operator easily directs the fluid stream to clean the underside and the interior of insulators. This allows a more economical use of the fluid carried onboard the helicopter.

Another advantage of this invention is that the apparatus of the present invention is designed to be detachably connected to the landing skids of a helicopter, for example a Hughes 500 Series Helicopter. All parts of the system, namely the fluid circuit, the boom assembly, the boom actuating means and the nozzle control means may be easily detached from the work platform. The pumping means is held in place with four bolts, and the boom assembly is secured by its own weight and one bolt, allowing the system of the present invention to be quickly and easily detached from the work platform. Once the boom assembly and the fluid circuit have been detached, the wing may be quickly attached to the work platform by sliding the wing into slot receptacles on the work platform and securing the wing to the platform with pins. The work platform may then be used by a repairmen in order to conduct repairs directly on high voltage transmission lines.

Still another advantage of the invention is that all the component parts of the apparatus are mounted onto the external platform made of electrically conductive material so that they are always of the same electrical potential. This design relies on the principle of the Faraday cage to allow for the boom and the helicopter to be flown in close proximity to the power lines without requiring the use of insulating materials.

### BRIEF DESCRIPTION OF THE DRAWINGS

Figure 1a is a top view of an helicopter, showing the fluid delivery system in an operating position;
Figure 1b is a top view of the portside door area of an helicopter, showing the inspector's seat;
Figure 2a is a side view of the helicopter showing the attachment of the external work platform to the helicopter skids;
Figure 2b is a side view of the helicopter showing the inspector's seat attached to the portside door;
Figure 3a is a front view of the helicopter, showing the boom in the transport position;
Figure 3b is a front view of the helicopter, showing the inspector's seat attached to the portside door;
Figure 4 is a top view of the work platform frame;
Figure 5 is a side view of the work platform frame;
Figure 6a shows an intercostal end support for the starboard side of the frame;
Figure 6b shows an intercostal end support for the port side of the frame;
Figure 6c shows another intercostal end support for the port side of the frame;
Figure 7a illustrates the bridge "Z" supports for the support box;
Figure 7b shows a top view of the anchor channels for the support box;
Figure 7c illustrates a top view of the shear panel for the power mount drive;
Figure 7d shows the power drive mount for securing the pumping means;
Figure 8a illustrates a top view bearing flange for supporting a boom assembly on the work platform;
Figure 8b shows a top view of the stop ring which is directly attached to the exterior work platform;
Figure 8c is a side view of the stop ring of Figure 8b;
Figure 9a shows the construction of a forward starboard slide/guide attachment;
Figure 9b shows the construction of a forward port slide/guide attachment;
Figure 9c shows the construction of a rear port slide/guide attachment;
Figure 10a illustrates a top view of the assembled work platform;
Figure 10b shows a side view of the assembled work platform, showing the slide/guide attachments;
Figure 10c shows the bottom view of the work platform, showing the slide/guide attachments, and placement of the modified bearing flange;
Figure 11a shows the saddle assembly;
Figure 11b shows a saddle leg;
Figure 11c shows a lower saddle assembly;
Figure 11d shows the construction of the saddle shell;
Figure 12 shows a lateral cross-sectional view of the spindle assembly;
Figure 13 is a top view of the spindle assembly of Figure 12, showing the range or horizontal motion of the spindle assembly;
Figure 14 is a lateral view of the yoke assembly for supporting the boom;
Figure 15 is a side view of the yoke assembly of Figure 14;
Figure 16 shows the spindle-yoke assembly.
Figure 17a is a side view of the central portion of the boom;
Figure 17b is a top view of the central portion of the boom of Figure 17a;
Figure 17c shows the construction of a bulkhead, which is installed between the counterweight and central portion of the boom arm;
Figure 17d is a side view of the bulkhead of Figure 17c;
Figure 17e is a view of a ring flange for the attachment of the boom assembly to the actuating means;
Figure 18a is a side view of the outboard portion of the boom;
Figure 18b is a top view of the outboard portion of the boom;
Figure 18c is a right hand side view of the tip of the outboard portion of the boom;
Figure 18d illustrates a ring flange;
Figure 19a is a top view of the counterweight assembly;
Figure 19b is a side view of the counterweight assembly of Figure 9a;
Figure 20a shows the construction of the boom stow assembly;
Figure 20b shows the construction of a latch sub-assembly of the boom stow assembly;
Figure 20c is a side view of the latch subassembly of Figure 20b;
Figure 21 shows an overview of the boom assembly and the mount for the control arm;
Figure 22 shows the fluid circuit;
Figure 23a shows a lateral view of the fluid supply tank;
Figure 23b illustrates an end view of the fluid supply tank;
Figure 23c illustrates a lateral view of a fitting for fixing the fluid tank to the floor of the helicopter;
Figure 23d illustrates a front view of the fitting of Figure 23c;
Figure 24a illustrates a top view of the wing assembly;
Figure 24b illustrates a right lateral view of the wing;
Figure 24c illustrates a front view of the wing assembly;
Figure 25a is a lateral view of the seat assembly;
Figure 25b illustrates a front view of the seat;
Figure 25c shows a lateral view of the seat support;
Figure 25d illustrates a front view of the seat support;
Figure 26a shows a front view of the footrest for inspector's feet;
Figure 26b shows a top view of the footrest for inspector's feet; and

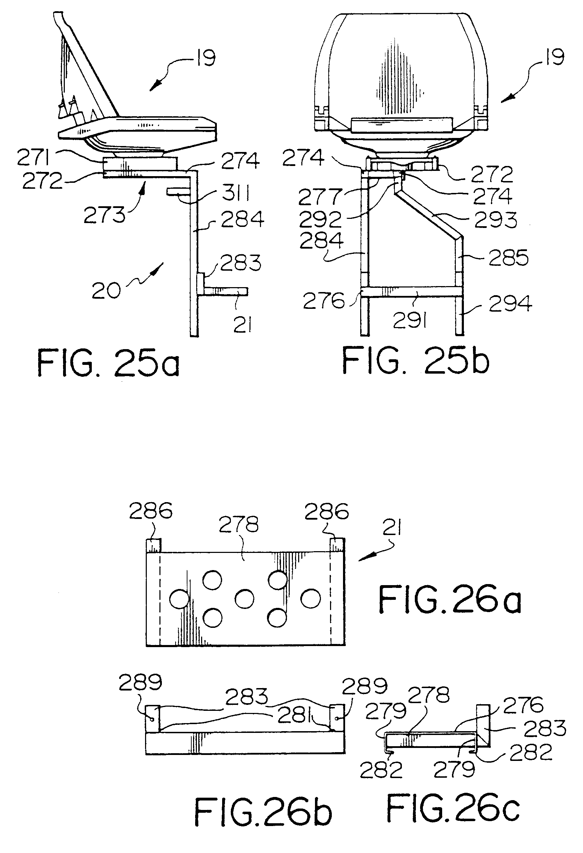

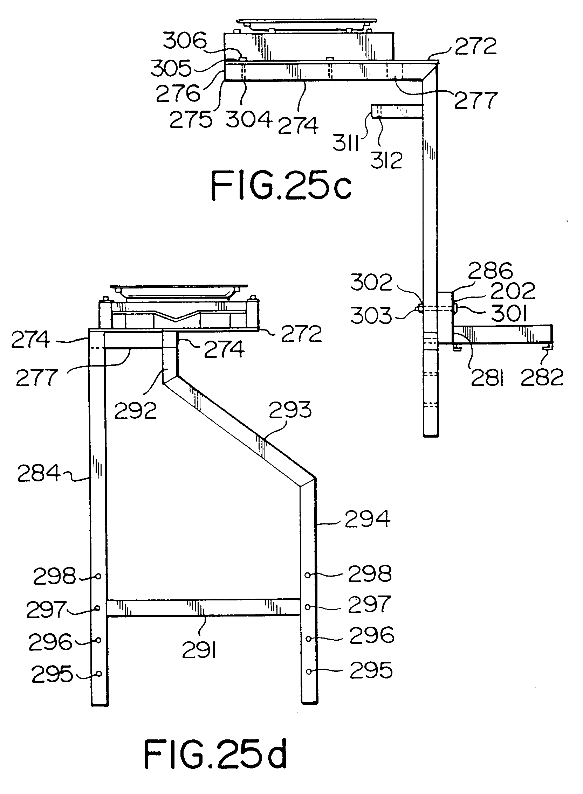

Figure 26cshows a lateral view of the footrest for inspector's feet.

### DESCRIPTION OF THE PREFERRED EMBODIMENT

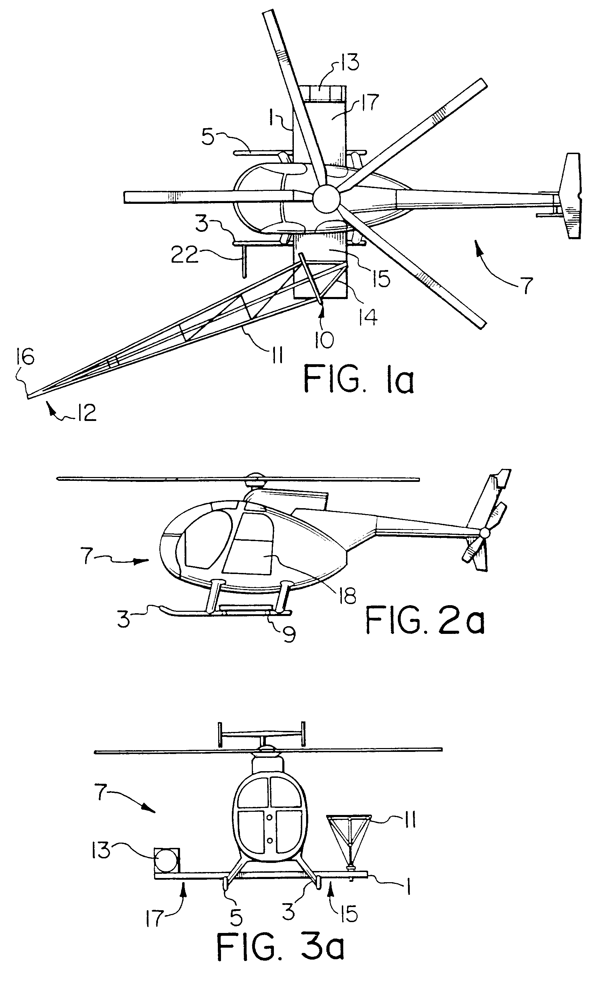

Figures 1a, 1b, 2a, 2b, 3a, and 3c illustrate an external work platform **1** attached to the port landing skid **3** and starboard landing skid **5** of a helicopter, for example a Hughes 500 Series Helicopter, generally designated with reference numeral **7**. The work platform **1** is removably attached to the skids by use of saddle assemblies **9**. Attached to the platform **1** is a cleaning fluid delivery system comprising a moveable boom assembly **11** and a pumping means **13**.

The boom assembly **11** is attached to the platform on the port side **15** of the work platform. It has an onboard end **10** and an outboard end **12**. At the onboard end **10**, a boom actuating means **14** is provided for controlling the position of the outboard end **12**.

Pumping means **13** comprises a pump, a pump engine and a pump engine fuel tank, all attached to the starboard side **17** of the work platform so as to counterweight the boom assembly **11**. Cleaning fluid, carried onboard the helicopter in a fluid storage tank (not shown), is pumped out by the pump through a rigid tube arranged inside the boom assembly **11** and delivered under pressure through a nozzle **16** at the outboard end **12** of the boom assembly **11**.

A boom stow assembly **22** is provided for maintaining the boom assembly **11** latched during displacement of the helicopter between the jobs.

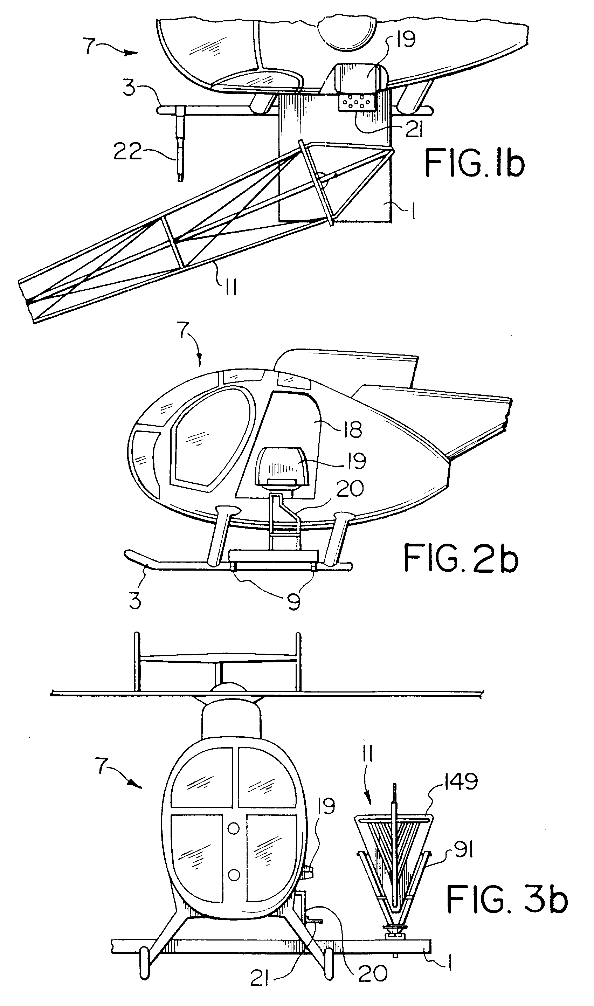

Figure 2a is a side view of the helicopter, boom assembly **11** removed, showing the attachment of the external work platform **1** on saddle assemblies **9** and Figure 2b shows the port rear cargo door area **18** with the inspector's seat **19** installed. The seat is attached to the door are **18** with a seat bracket **20**. Step **21** is provided for accommodating inspector's feet.

Figure 3a is a front view of the helicopter, showing the boom assembly in the transport position. Figure 3b is a front view of the helicopter, illustrating the inspector's seat attached to the port side door.

### The external work platform 1

In a preferred embodiment, the external work platform **1** measures 366 cm in total length and 91cm in total width. It is designed to be mounted off-centre on the landing skids of the helicopter, so that the port side **15** of the work platform **1** extends 112 cm from the port landing skid **3** of the helicopter, while the starboard side **17** of the work platform extends 142 cm from the starboard landing skid **5** of the helicopter. This arrangement is made so that when the boom assembly **11** and the pumping means **13** are attached to the external work platform **1**, the helicopter is counterbalanced.

### The frame

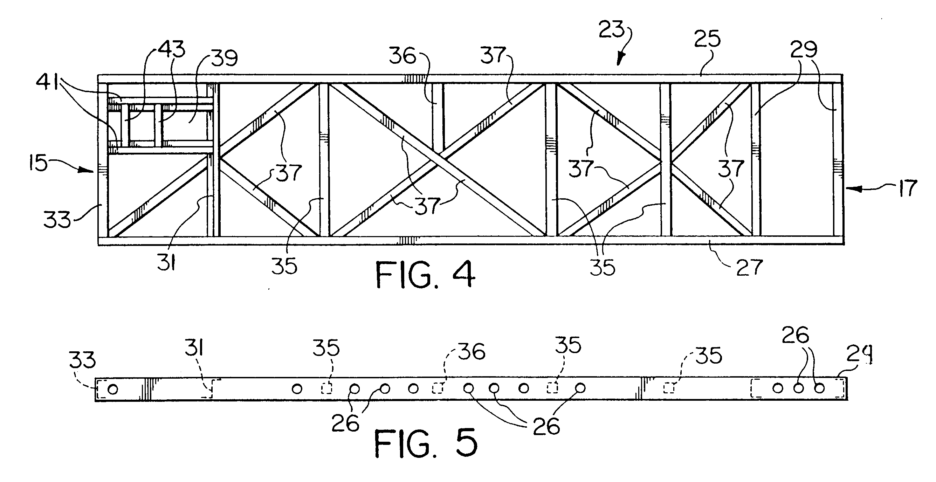

The metal frame **23** of the external work platform **1** is illustrated in Figures 4 and 5. Frame **23** is preferably constructed of lightweight Aluminum, which is electrically conductive. A front channel beam **25** and a rear channel beam **27** form the length of the work platform **1**. These channel beams are connected by parallel intercostal channels, namely two rear intercostal end channels **29**, at the starboard side **17** of the work platform **1**, intermediate supports **35**, an intercostal channel **31**, and a port end intercostal channel **33** at the port side **15** of the work platform.

The intercostal channels **29**, **31** and **33**, together with intermediate supports **35** are arranged in their appropriate positions as shown in Figure 4, between the forward channel beam **25** and rear channel beam **27**. Diagonal struts **37** are used to brace the intercostal supports.

In the following, a preferred embodiment of the frame is disclosed. The front channel beam **25** is constructed from a 20 cm by 366 cm sheet of aluminum 31 mm thick, which is bent twice at a 90 degree angle along its long axis so as to make a "U" channel measuring 5 cm x 5 cm x 10 cm. The rear channel beam **27** is constructed in a similar manner, but is constructed from an 20 cm by 366 cm sheet of aluminum 16 mm thick. Lightening holes **26** are milled into the front and rear channel beams **25** and **27** so as to decrease the weight of the structure while retaining rigidity.

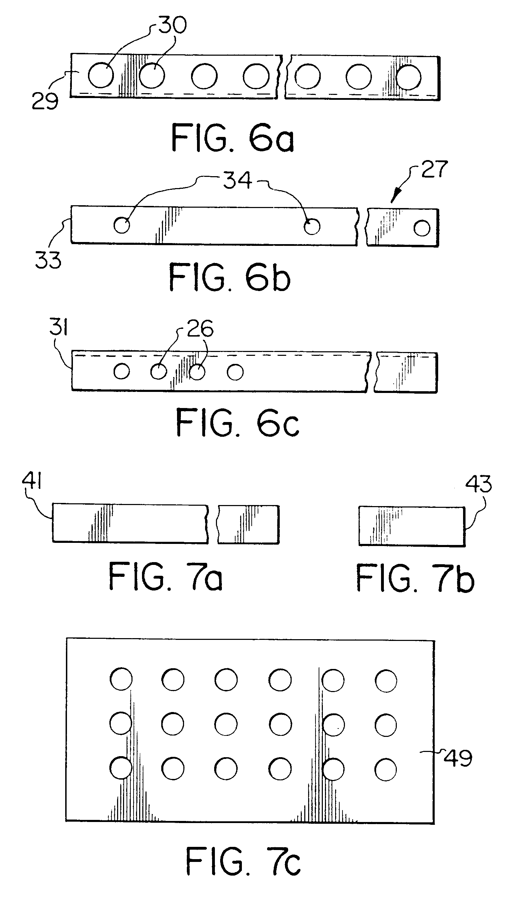

The intercostal channels **29** are constructed by fashioning a "U" channel measuring 44 mm x 44 mm x 10 cm, as shown in Figure 6a.

The port end intercostal channel **33** is constructed from a piece of Aluminum 91 cm long and 18.4 cm wide, that is bent into a "U" shape, and has lightening holes punched in it as shown in Figure 6b. Three receptacle holes **34** are then cut into this channel, the first hole being flush with the end that abuts with the front channel beam **25**, the second being placed in the exact centre of the intercostal, and the third being placed 14 cm from the end which abuts with the rear channel beam **27**. These holes are used for mounting the support box, as it will be described later.

Intercostal channel **31** is constructed from a piece of Aluminum 90.6 cm long and 18.4 cm wide, which is bent and has lightening holes punched in it as shown in Figure 6c. Three plate ends are then constructed from a piece of Aluminum 15 cm wide and 9.5 cm high. Either end of the "Z" intercostal **31** is then welded to the centre of a plate end to form a "Z" intercostal support. As for channel **33**, three receptacle holes **34** are then cut into this channel, the first hole being flush with the end that abuts with the front channel beam **25**, the second being placed in the exact centre of the intercostal, and the third being placed 14 cm from the end which abuts with the rear channel beam **27**.

An intermediate support **35** is manufactured from a 5 cm square rectangular tubing cut into 91 cm lengths. Six plate ends are constructed by taking sheets of Aluminum 20 cm in width and 13 cm in height, then bending them at a ninety degree angle 38 mm from their base, so as to form "L" joints. The ends of the tubing are then welded to the centre of the plate ends to form the intermediate support **35**.

The diagonal studs **37** are constructed of tubular aluminum having a diameter of 5 cm. They are hand cut to fit as shown in Figure 4 and are hand trimmed to fit flush with the intercostal supports and channel beams that they fit up against.

The intercostal channels **35** and **31** are then bolted to the front channel beam **25** and to the rear channel beam **27** for example, by means of four 6 mm structural steel bolts, 6 mm washers, and 6 mm steel self locking nuts. The port end intercostal channel **33** and rear intercostal channels **29** are welded to **25** and **27**. The diagonal struts **37** are then positioned as shown in Figure 4 and are welded to the intercostal supports and channel beams to which they come in contact.

Three stub tube housing assemblies (not shown) are then constructed from rectangular Aluminum tubing having an internal height and width of 5 cm, and are cut into 12.7 cm lengths. These are then welded to the inside of the port end intercostal **33** so that the inside of the tube is flush with the receptacle holes **34**.

### The support box

A support box **39** is provided at the port end side **15** of the platform for supporting the boom assembly **11**. The support box **39** is formed by two bridge beams **41**, of a structure shown in Figure 7a, and two anchor channels **43**, as shown in Figure 7b. The anchor channels **43** are welded to the bridge beams **41** as shown in Figure 4 so as to create the support box **39** measuring 25.4 cm square. This support box **39** is positioned 19 cm from the front channel beam **25** and is connected to the port end intercostal **33** by rivets and to the "Z" intercostal **31** by welding.

Preferably, the bridge beams **41** are constructed from a piece of Aluminum 55.9 cm long, and 15.9 cm wide, which is bent into a "Z" channel as shown in Figure 7a. Two shear clips are then constructed from pieces of Aluminum 6.3 cm long and 5 cm wide, which are bent in half to form an "L" shape 2.5 cm wide by 6.3 cm long. The long edge of the shear clips is welded to the side of the bridge beam **41** which abuts up next to the port end intercostal channel **33** so as to present a flat surface to this channel. The anchor channels **43** are constructed from a piece of Aluminum 25.4 cm long and 14.6 cm wide, which is bent into a "U" channel as shown in Figure 7b.

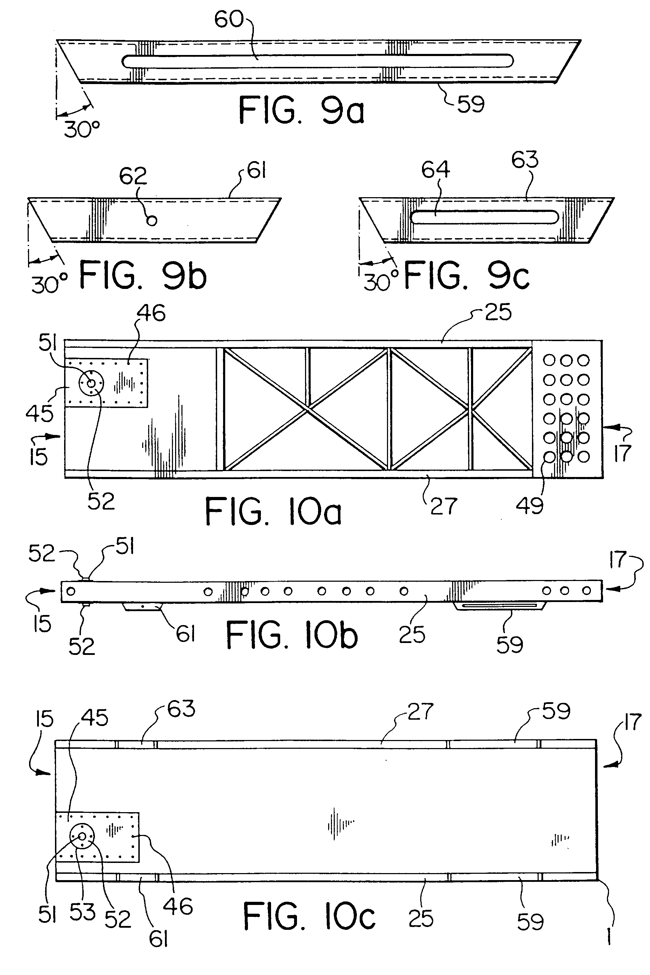

The support box **39** is designed to support the boom assembly and to allow rotation thereof in a horizontal plane by use of a spindle, which will be described later. To this end, a spindle shaft **50** is inserted in a hole **51** in the support box **39** of the work platform **1**, such that the spindle can rotate while carrying the boom assembly **11**. The support box **39** is protected on both sides with a cover plate **45**, as illustrated in Figures 10a and 10c. The cover plates **45** are preferably constructed from a sheet of aluminum measuring 12.7 cm wide by 91 cm long. A hole **51** is 3.8 cm in diameter and is milled out of the cover plates **45**. The cover plates **45** are attached to the upper and lower portion of the support box **39** as shown in Figures 10a and 10c with structural steel screws **46**.

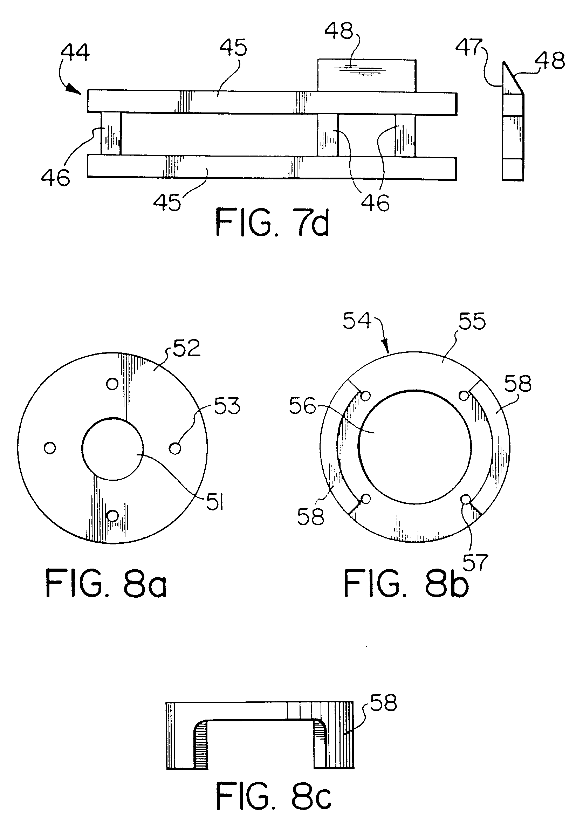

The hole **51** is further formed with two self-lubricating steel bearing flanges for rotatably receiving a 3.8 cm shaft **50** of the spindle. The flanges **52** are modified by drilling four 6 mm holes **53** as indicated in Figure 8a. The first flange is inserted and secured to the top cover plate **45** with four bolts, four nuts, and eight rivets inserted through the holes **53**. The second flange is inserted and secured to the bottom cover plate **45** in the same manner.

A stop ring **54** is attached on the face of platform **1** over the flange **52**, for limiting the rotation of the boom assembly **11**. The spindle shaft **50**, and consequently the boom assembly **11** is allowed to rotate 90 degrees only, for security of travel of the helicopter. The stop ring **54** is illustrated in Figure 8b. It is constructed preferably by cutting a piece of aluminum 1.3 cm thick so as to produce a circular ring **55** having 15.2 cm in diameter, the centre of which is milled out so as to produce a hole **56** with 8.9 cm in diameter. Four bolt holes **57** with a diameter of 6 mm are drilled in this ring **55**. Two pieces **58** of aluminum 1.6 cm thick, 3.8 cm high, and 11.9 cm long are then bent so as to be flush with the edge of the circular ring **55** as shown in Figures 8b and 8c, and are positioned opposite each other so that the ends of each piece are located at a bolt hole **57**. The pieces **58** are then welded to the circular ring to produce the finished stop ring **54**. The stop ring **54** is then attached to the platform **1** by four bolts that are placed through the bolt holes **56** of the stop ring and the bolt holes **53** of the modified bearing flange **52**. When properly assembled, the pieces **58** should protrude from the forward right and left rear quadrants of the stop ring **55**.

### The power drive mount

A power drive mount **44** for holding the pumping means is illustrated in Figure 7d. The power drive mount **44** is made from two 91 cm lengths **45**, three 9.5 cm lengths **46** of 5 cm x 5 cm square Aluminum tubing, a first plate **47** measuring 24.1 cm in length and 7.6 cm in width, and a second plate of Aluminum **48** measuring 24.1 cm in length and 9.1 cm in width. These parts are then welded together as illustrated in Figure 7c.

Two shear panels **49** are constructed from a sheet of Aluminum measuring 43.2 cm wide by 91 cm long, as shown in Figure 7d. Eighteen lightening holes are punched in each channel. The shear panels are then bolted to the upper and lower surface of the starboard side of the platform **1**, on rear intercostal channels **29**. Four 6 mm holes are drilled through the shear panel and the front channel beam **25** and rear channel beam **27**, respectively.

The power drive mount is attached at the starboard side **17** of the work platform **1** by use of four holes having a diameter of 6 mm drilled in the corners of the power/drive mount so that they match up with the bolt holes previously drilled in the work platform.

The entire upper surface of the work platform which has not already been covered by either the cover plate **45** or shear panel **49** is then covered with a screen made of aluminum mesh. This is then spot welded to the frame of the external work platform, so that all parts of the external work platform are of the same electrical potential.

### The means for removably fixing the platform to the helicopter

The means for removably fixing the external work platform **1** to the helicopter comprises four saddle assemblies **9** attached to the helicopter skids, which cooperate with the slide/guide attachments **59**, **61** and **63**.

Slide/guide attachments **59**, **60**, and **61**, shown in Figures 9a to 9c, are fixed on the back face of the work platform. All slide/guide attachments are constructed from 5 cm square Aluminum tubing which have their ends cut at a 30 degree angle.

Two starboard slide/guide attachments **59** are respectively mounted to the bottom edge of the front channel beam **25** and rear channel beam **27** with four bolts, washers and nuts as shown in Figures 10b and 10c. A starboard slide/guide attachment is preferably 64.8 cm long, and has an area of the tubing **60** measuring 1.3 cm in height and 48.9 cm in length milled out of the tube, as shown in Figure 9a. Area **60** allows that the platform be displaced accurately to the equilibrium position when mounted on the skids.

The forward port slide/guide attachment **61** is mounted to the bottom edge of the front channel beam **25** by means of four bolts, washers and nuts, so that the centre of the slide is attached to the front channel beam at a position 56 cm from the front left corner, as shown in Figure 10c. The forward slide/guide attachment measures 30.5 cm long, and has a 8 mm hole **62** bored through the centre of the tubing, as shown in Figure 9b.

The rear port slide/guide attachment **63** is attached to the bottom edge of the rear channel beam **27** with four bolts, washers and nuts, so that the centre of the slide is attached to the rear channel **27** at a position 56 cm from the end of the channel beam. The rear slide/guide attachment measures 30.5 cm long, and has an area of the tube **64** measuring 1.3 cm high and 17.8 cm in length that is milled out of the centre, as shown in Figure 9c. Area **64** allows that the platform be displaced when mounted on the skids.

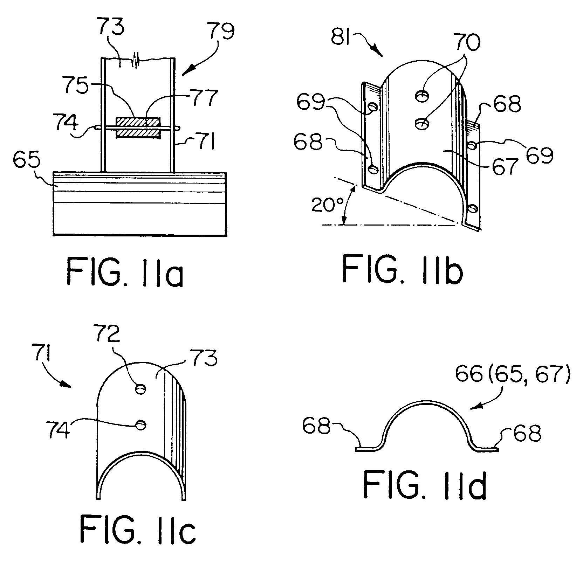

A saddle assembly **9** comprises an upper assembly **79** designed to be attached to a slide/guide assembly, and to a lower assembly **71** which is bolted directly to one of the helicopter skids **3** or **5**. The upper and lower assemblies are illustrated in Figures 11a and c, respectively.

In the preferred embodiment, an upper plate **65** and a lower plate **67** are constructed by making a saddle shell **66** from steel alloy, which is bent to form a circular shell with an internal radius of 4 cm, and two wings **68** measuring 2.5 cm, as shown in Figure 11d. Each of the wings **68** on the saddle shell **66** is drilled with two 6 mm diameter holes **69** so as to accept a bolt. The lower plate then has two 6 mm diameter holes **70** drilled into it at a 20 degree angle from the top of the plate, so as to be mounted directly onto the underside of the helicopter skid through pre-existing bolt holes on the helicopter, which are used to mount skid plates.

Saddle legs **71** are then constructed as shown on Figure 11c with two 16 mm holes **72** and **74** being drilled into them. Shear webs **83** are constructed from a piece of steel 5 cm in height and 6.4 cm in width. The saddle legs **71** are then welded to the shear webs **83** to form a saddle box **73** measuring 7.9 cm by 6.4 cm. The saddle box is then welded to the saddle plate **65** at a 20 degree angle from the centre of the saddle leg to form the rough saddle assembly **79**.

A roller **77** is constructed by taking a Nylon rod 2.5 cm in diameter and 5 cm in length, and boring a 1.3 cm hole through the length of the rod. A spacer/bushing **75** is constructed by taking a Steel Alloy tube 1.3 cm in diameter and 6.3 cm in length and boring a 8 mm diameter hole through the length of the rod. The spacer/bushing **75** is then slipped through the roller **77** so that the roller is able to slide on the spacer/bushing. The spacer/bushing is then affixed inside the saddle box **73** by means of an 8 mm bolt (not shown), which is inserted through the lower of the bolt holes **74**, and through the spacer/bushing. The bolt is then affixed by means of a washer and nut, producing the finished upper saddle assembly **79**.

The saddle legs are mounted on the helicopter skids as follows. A liner made of neoprene rubber is then cut to fit the curved portion of the saddle shell which comes directly in contact with the landing struts, and is affixed with adhesive. The lower saddle plate assembly is bolted to the pre-existing bolt holes on the underside of the helicopter landing skid. The saddle assembly **79** is then bolted to the lower plate assembly by means of four bolts nuts and washers. The saddle legs should stand perfectly vertical when properly connected to the landing struts. As well, the port helicopter landing strut is between the upper and lower saddle shell at a distance of approximately 20.3 cm from the front of the port helicopter landing strut. A bonding strap is then attached between the boom stow assembly and the helicopter so that both are of the same electrical potential.

The external platform is fixed on the helicopter by means of four saddle assemblies **79** by attaching the upper plates to the respective slide/guide assemblies. Thus, a bolt is run through the top hole **72** of a forward saddle leg **71**, through the slide/guides **59**, and out through the top hole of the other forward saddle leg. The bolt is held in place with a washer and nut. Similarly, the rear saddle legs are attached with a bolt running through the top holes **72** and the slide/guides **61** and **63**. This method of attachment allows the work platform to be held securely in place at all times, while allowing the landing struts of helicopters to flex upon the takeoff or landing. A bonding strap is then attached between the external work platform and landing skids so as to ensure that both are of the same electrical potential.

As already mentioned, the work platform **1** is a multi-purpose platform in that it may be used for aerial cleaning and for inspection/repair of for example electrical lines.

When the work platform is used for cleaning purposes, for example for cleaning the insulators of the high voltage transmission lines, a cleaning fluid delivery system is detachably attached to the work platform **1**.

### The boom assembly

The boom assembly comprises the spindle-yoke assembly **119**, the boom **120**, and a counterweight assembly **117**. The support means on the port side rotatably receive the shaft of the spindle-yoke assembly and allow for easy dismantling the boom assembly and the fluid circuit so that the platform may be used for inspection or repair. This later means has been disclosed above in connection with the work platform **1**.

### The spindle-yoke assembly 119

The spindle-yoke assembly is placed at the port side **15** of the work platform and comprises a spindle and a yoke for driving the onboard end **10** of the boom assembly **11** to rotate in a horizontal and a vertical plane.

The spindle-yoke assembly is comprised of a spindle **89** adapted to rotate in the hole **51** provided in the work platform, and a yoke **91**, coupled to the boom assembly **11**. The spindle **89** rotates the onboard end **10** of the boom assembly **11** in a horizontal plane, while the yoke **91** allows rotation of the end **10** in a vertical plane. As a result, the outboard end **12** may attain a desired position.

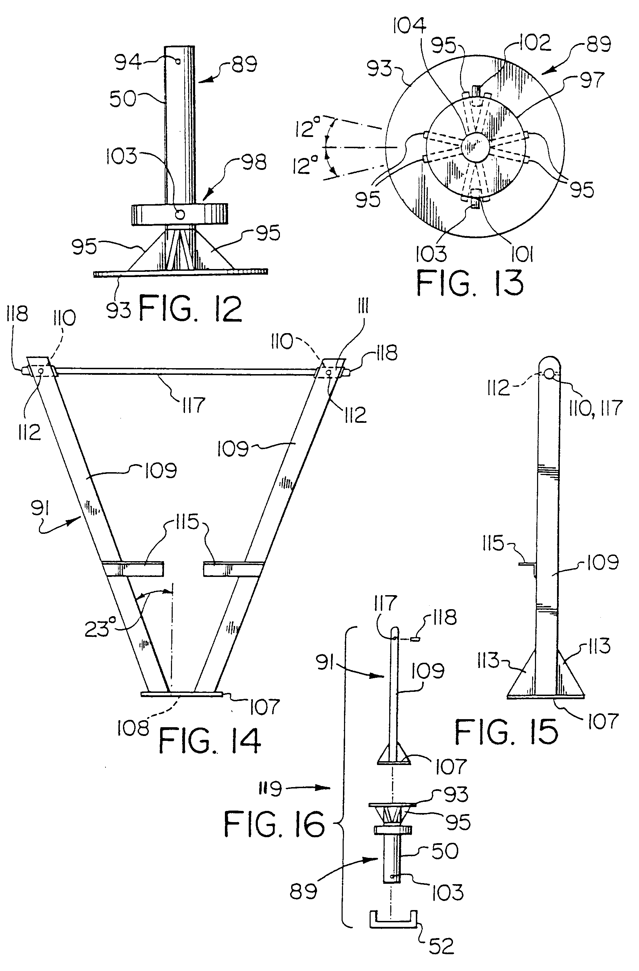

Spindle **89** is illustrated in Figures 12 and 13. It comprises the spindle shaft **50**, which is fixed at one end to a base plate **93**, so that both rotate together. A stop pin hub **98** is also fixed on shaft **50**. The distance between hub **98** and the other end of shaft **50** is selected to be slightly more than the thickness of the work platform **1**. The stop pin hub **98** is also fixed on shaft **50** and is manufactured with two protruding plugs **103**, which travel in the space created between circular ring **55** and pieces **58** (see Fig. 8b). The spindle is preferably constructed by fashioning the base plate **93** from a piece of aluminum having a diameter of 22.9 cm. To the centre of the base plate **93** is welded the spindle shaft **50** of 3.8 cm aluminum tubing 27.9 cm long. The spindle shaft **50** is supported by eight triangular shaped gussets **95** that are constructed from aluminum sheeting 9 mm thick. The gussets **95** are welded to the base plate **93** and spindle shaft **50**.

Pin hub **98** comprises a circular rotator ring **97** constructed from a piece of Aluminum 2.5 cm thick with a diameter of 12.6 cm. Two tap holes **101** that are 2.5 cm deep having a diameter of 11 mm are drilled in the centre plane of the rotator ring **97** at 180 degree angles to each other. A hex head bolt **102** that is 13 mm wide and 2.5 cm long is then screwed into the tap holes **101**, so that 13 mm of the shaft of the bolt is left protruding. The head of the bolt is then cut off to leave a metal plug **103** which is 13 mm long and 13 mm wide protruding from the rotator ring **97**.

A circular hole **104** with a diameter of 3.8 cm is then milled in the centre of the rotator ring **97** to produce the stop pin hub **98**. The stop pin hub 98 is then slid over the spindle shaft **50** until it is 5.7 cm from the base plate **93**. The stop pin hub **98** is then welded to the spindle shaft to produce the completed spindle assembly **89**.

When the spindle assembly **89** is dropped into the stop ring **54**, the spindle assembly can only be rotated 90 degrees horizontally, preventing the operator from striking the tail of the helicopter with the boom. The rotation of the spindle is limited to a 90 degrees angle, due to the limited trip of plugs **103** inside the pieces **58** of the stop ring **54**.

The shaft **50** is provided with a hole **94**. A bolt is inserted into this hole after the spindle is dropped into the stop ring, for attaching the actuating means to the work platform, while allowing the shaft to rotate.

The yoke assembly **91** comprises a base plate **107** and two arms **109**, as illustrated in Figures 14 and 15. The arms are fixed at one end to the base plate **107** and diverge towards the other end, to support a shaft **117**. Shaft **117** is coupled with the onboard end of the boom assembly to allow rotation thereof in a vertical plane. The base plate **107** is fixed to base **93** of the spindle assembly to rotate together along a vertical axis.

The base plate **107** is preferably constructed by cutting a circular piece that has a diameter of 15.2 cm and a depth of 5 mm, then milling a hole **108** having a diameter of 2.5 cm in the centre. The yoke arms **109** are constructed from 3.8 cm x 3.8 cm square Aluminum tubing, the base of which is cut at a 23 degree angle. A 19 mm hole **110** is then drilled through each of the yoke arms **109** at a 23 degree angle to the surface of the yoke arm, as demonstrated in Figure 14. A metal bushing **111** having a diameter of 19 mm and a length of 5 cm is then inserted into each hole **110** so that either end of the bushing **111** overlaps the end of the yoke arm **109** by 6 mm. The bushing is then welded to the yoke arm. A pin-spring hole **112** is then drilled through the yoke arm and bushing.

The yoke arms **109** are welded to the base plate **107** so that the arms are directly opposite each other. Four gussets **113** are welded to the base plate **107** and yoke arms **109** as shown in Figure 15 so as to provide additional support for the yoke arms.

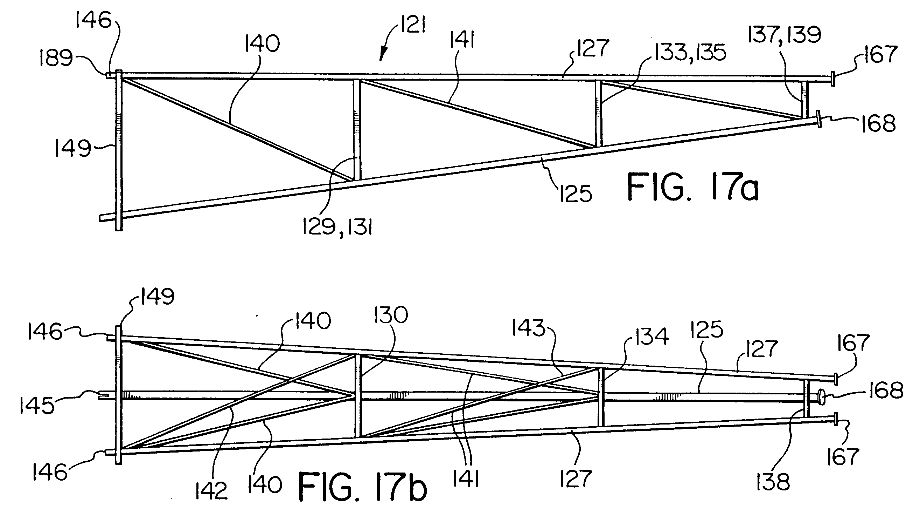

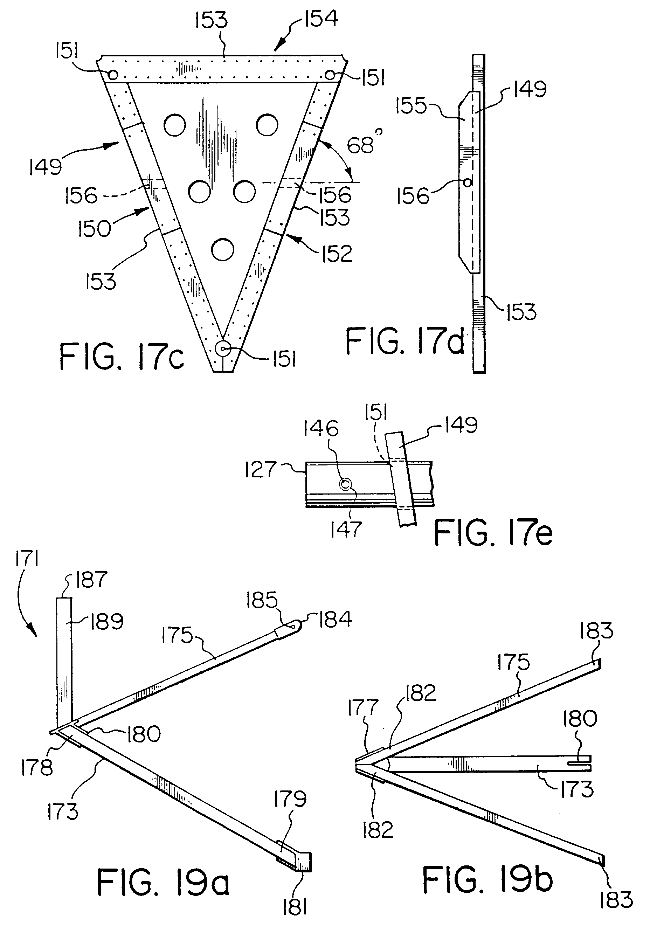

The shaft **117** is inserted through holes **110** and through the holes **156** of the bulkhead **149** (see Fig. 17c) for coupling the yoke to the boom assembly **11**. Shaft **117** is constructed from a piece of Aluminum tubing having a diameter of 1.6 cm and a length of 60.3 cm. Two 17.8 cm long shaft plugs **118** are fashioned from a rod of Aluminum having a diameter of 14 mm. The shaft plugs **118** are then inserted into either end of the shaft **117** so that the end of the shaft plug is flush with the end of the shaft.

Two up stops **115** are welded on the interior of each yoke arm so that the top of the up stops is attached 21.1 cm from the surface of the base plate. A stop **115** is made from a piece of Aluminum having a height of 5.7 cm and a width of 8.9 cm, which is bent at a 90 degree angle at the 2.5 cm mark along its height, to produce a "L" shaped piece of metal 8.9 cm long.

The spindle yoke assembly **119** is created by bolting the base plate **93** of the spindle assembly **89** to the base plate **107** of the yoke assembly **91** as shown in Figure 16. The entire structure is of the same electrical potential. The spindle yoke assembly **119** is then dropped into the spindle shaft hole **51** of the flange **52** so that the two metal plugs **103** come into contact with the stop ring **54**. The spindle yoke assembly is secured after being inserted through the platform **1** with a bolt, and a bonding strap is attached between the spindle yoke assembly and the platform **1** so that both are of the same electrical potential. The boom arm is then placed on the spindle yoke assembly **119**, by placing the shaft **117** trough the holes **110** in the yoke arms of the spindle yoke assembly **119,** and the holes **156** in bulkhead **149** of the boom arm, so as to allow the boom arm to swivel vertically. A bonding strap is then attached between the boom and the spindle yoke assembly so that both are of the same electrical potential.

### The boom 120

The boom assembly preferably comprises two parts, an onboard or central section **121**, and an outboard section **157** which are designed to be broken apart for ease of transport.

In a preferred embodiment, the central section **121**, illustrated in Figures 17a-17e, comprises a lower longeron **125** and two upper longerons **127**. The lower longeron **125** is constructed from Aluminum tubing 3.9 cm in diameter and 366 cm in length. Each upper longeron **127** is constructed from Aluminum tubing 2.5 cm in diameter and 370 cm in length. The upper and lower longerons are connected by three horizontal member stays **130**, **134** and **138**, and six "V" member stays **129**, **131**; **133**, **135**; and **137**, **139**. The stays are preferably manufactured of Aluminum tubing of differing lengths having a diameter of 19 mm, and are arranged in a triangular fashion between the upper and lower longerons so that the central section is shaped as a frusta-pyramidal body of a large end tapering to a small end. The stays at the large end of the boom is comprised of two "V" stays **129**, **131** which are 47 cm long, and a matching horizontal stay **130**, which is 58.5 cm long. The middle portion consists of the "V" stays **133** and **135**, 39.2 cm long and the horizontal stay **134**, 31.8 cm long. The small end consists of the "V" stays **137** and **139**, 21 cm long, and the horizontal stay **134**, 20.3 cm long. The horizontal stays and "V" member stays are trimmed so as to fit flush against the upper and lower longerons to which they come into contact, and are welded into place, as shown in Figures 17a and b.

Diagonal members **140-143** are used to further reinforce this structure. Two members **140** are constructed from tubing having a diameter of 19 mm and a length of 138.4 cm, two members **141** from tubing having a diameter of 13 mm and a length of 128.9 cm, one member **142** from a tube having a diameter of 2.5 cm and a length of 132 cm, and one member **143** from a tube having a diameter of 13 mm and a length of 47 cm. These are placed as shown in Figures 17a and 17b, are trimmed so as to fit flush against the stays and longerons to which they come into contact, and are welded into place.

A vertical slot **145** is then cut into the end of the lower longeron **125**, at the large end of the central section of the boom. At the same end, a hole **146** having a diameter of 9.5 mm is then drilled through the two upper longerons **127** as shown in further detail on Figure 17e. Two bushings **147** are constructed from Aluminum tubing having an outer diameter of 9.5 mm, and inner diameter of 6 mm, and a length of 3.2 cm. The bushing **147** is then inserted into the hole **147**, and is welded to the upper channel member. These holes are used for connecting the longerons to the counterweight, as it will be described later.

A triangular bulkhead **149** having sides **150**, **152** and **154** is attached to the onboard end **10** of the boom assembly **11** for further reinforcing the structure and for connection with the actuating means **14**. The bulkhead is shown in Figures 17c and 17d, has a triangular shape and is provided with connecting holes **151**. Holes **151** receive the onboard end of longerons **125** and **127**. Two pivot channels are provided on the sides **150** and **152**, to receive shaft **117** along a direction parallel to side **154**.

The bulkhead is preferably manufactured from an Aluminum panel 74.9 cm wide and 88.3 cm high, cutting it into a triangular shape, and placing lightening holes and connector holes **151**. One upper channel stiffener **153** is constructed from a sheet of Aluminum 11.4 cm wide and 71.1 cm long, which is bent twice 19 mm from either side of this piece so to make a "U" shaped piece of metal 7.6 cm wide and 71.1 cm long fixed along side **154**. Two lower channel stiffeners **153** are then constructed from a sheet of Aluminum 9.5 cm wide and 86.4 cm long, which is bent twice 19 mm from either side of the piece so as to make a "U" shaped piece of metal 5.7 cm wide and 86.4 cm long. The channel stiffeners are then placed on the panel along sides **150** and **152**, are trimmed so as to form a perfect triangle flush with the edge of the panel, and are riveted into place.

The pivot channels **155** are preferably manufactured from a piece of Aluminum 19 cm wide and 50.8 cm long, which is bent twice 6.4 cm in from either side so as to make a "U" shaped piece of metal 6.4 cm square and 50.8 cm long. The corners forming the bottom of the "U" of either end of the pivot channel are then cut off, and hole **156** having 2.7 cm in diameter is bored in the centre of each pivot channel, as shown in Figure 17d. The pivot channels **155** are then inserted into the channel of each channel stiffener **153** on sides **150** and **152**, and are riveted in place in accordance with Figure 17d. The lower longeron **125** and the two upper longerons **127** are then inserted through the connector holes **151** in the bulkhead **141**.

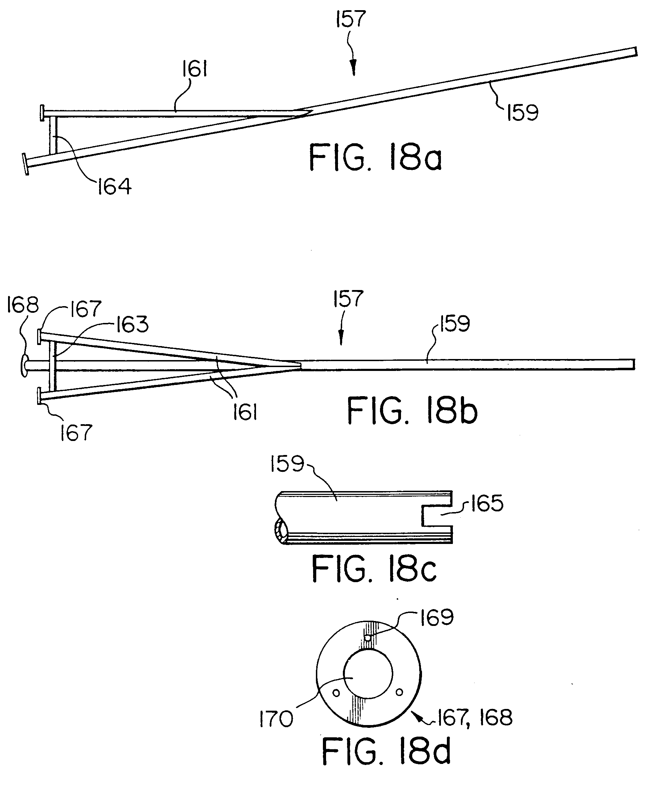

The outboard section **157** of the boom arm comprises a lower longeron **159** and two upper longerons **161**, adapted to be coupled with the respective longerons of the central section. Preferably, the upper longerons **161** are made of Aluminum tubing 2.5 cm in diameter and 127 cm in length, and the lower longeron **159** is made of Aluminum tubing 4.1 cm in diameter and 288.3 cm in length. The end of each upper longeron **161** is then trimmed so it attaches flush to the lower longeron **159** as shown in Figures 18a and 18b. A horizontal stay **163** and two "V" member stays **164** are used to reinforce the structure of the outboard section. Preferably, the horizontal stay **163** is constructed from tubing having a diameter of 19 mm and 18.3 cm in length, and the "V" member stays **164** are constructed from similar tubing 20.5 cm in length. The horizontal stay and "V" member stays are then trimmed so as to fit flush between the upper and lower longerons. The two upper longerons **161**, the lower longeron **159**, and the horizontal **163** and "V" member stays **164** are then welded together. A notch **165** having a height of 1.6 cm and a depth of 2.5 cm is then cut out of the right side of the lower longeron onboard end, as shown in Figure 18c.

Six ring flanges **167**, **168** are used for coupling the central and outboard sections. Flanges **161**, **168** are preferably constructed from Aluminum sheeting. Four small ring flanges **167** are constructed so as to have an outer diameter of 7.6 cm, in which a central hole **170** having 2.5 cm in diameter, and 3 connector holes **169**, having 8 mm in diameter are drilled, in accordance with Figure 18d. Two large ring flanges **168** are constructed so as to have an outer diameter of 9.2 cm, with a central hole **168**, having 4.1 cm in diameter, and three connector holes **169**. The large ring flanges **168** are respectively welded to the ends of the two lower longerons **125** and **159** on the inboard section (Figures 17a, b) and of the outboard section of the boom, so that the connector holes **169** are aligned, and so that the centre hole **170** is flush with the hollow interior the lower longerons. The small ring flanges **167** are then similarly welded to the ends of the upper longerons **127** and **161** on the inboard and outboard sections of the boom arm. The outboard section is easily fixed to the central section by screws, bolts and nuts through connector holes **169**.

### The counterweight assembly 171

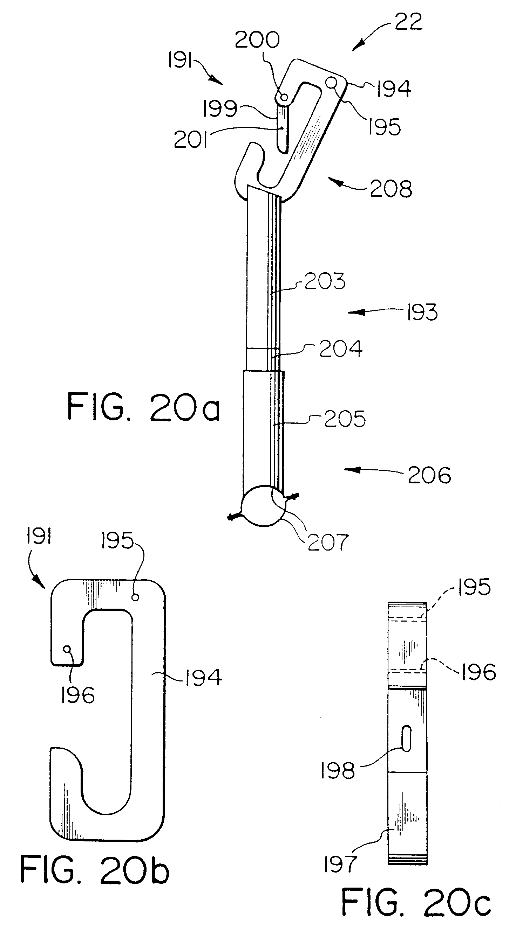

The counterweight assembly portion **171** is illustrated in Figures 19a and 19b. The counterweight assembly is attached to the central section of the boom assembly and it is used for obtaining the actuating load point for moving vertically the boom assembly **11** with respect to the pivot point on the yoke shaft **117**. The counterweight assembly comprises a connector section and a ballast box. The connector section includes a lower strut **173** and two upper struts **175**. The struts are arranged to form the sides of a pyramid, one end of all struts being connected together by an end plate assembly **177** at actuating ends **182** and **178**. The other end **183** and **179** of the upper struts **175** and the lower strut are adapted to be coupled to the ends of the lower and upper longerons of the central section, which protrude through connector holes **151** of the bulkhead **149**.

The end plate assembly **177** is constructed to fix together by welding a bottom end plate to a top end plate. The bottom end plate is fashioned from a piece of Aluminum 2 mm thick, 7.6 cm long, and 5 cm wide, the top corner of which is cut off at a 22.5 degree angle to produce a polygonal structure. The top end plate is a pentagonal shaped structure having a long axis of 11.4 cm, a maximum width of 10.2 cm, a minimum width of 5 cm, and a thickness of 2 mm.

The upper struts **175** are constructed from aluminum tubing having a diameter of 2.5 cm and a length of 88.9 cm. A slot 2 mm in diameter is cut into end **182** of the struts, and that end is trimmed so that the upper strut may be slid securely onto the end plate **177** so that it contacts the end plate and the other strut. The lower strut **173** is preferably made from a piece of Aluminum tubing having a diameter of 4.1 cm and a length of 91 cm. Actuating end **178** is cut at a 31 degree angle, and the other end **179** is cut at a 22.5 degree angle. Slots **180** measuring 2 mm wide and 6.4 mm long are then cut into either end of the strut, as indicated in Figures 19a and 19b. A splice plate **181** is constructed from an Aluminum piece 2 mm thick, and 10.2 cm x 10.2 cm square with the polygonal structure shown in Figure 19a is inserted in slot **180** at end **179**.

The upper struts **175** and lower strut **173** are then welded to the end plate **177**, and the splice plate **181** is welded to the lower strut **173**. Two attachment plugs **184**, constructed from a solid aluminum rod 2.2 cm thick, are placed into the hollow interior of the upper struts at end **183**, and are welded into place. A connection hole **185**, having a diameter of 6 mm is then milled through the attachment plug **184**. This connection plug serves as a joint so that the struts of the counterweight portion may be attached to the longerons of the central portion.

The connector section is attached to the central section **121** to form the inboard portion of the boom assembly **11** by inserting the splice plate **181** into the slot **145** on the lower longeron, and welding the two together. The ends of the two upper longerons **127** are connected to the two upper struts **175** by running a bolt through the connection hole **185** in the connector plug **184** and then through the bushing **147** to which the plug **184** comes into contact, and fastening the bolt with a nut and a washer, so that all parts of the inboard portion are of the same electrical potential.

The ballast box **187** is preferably constructed from rectangular Aluminum tubing having a length of 7.6 cm and a width of 10.2 cm, that is 43.1 cm high. The bottom of the ballast box is cut at a 22.5 degree angle, and is welded to the end plate **177**. The inside of the ballast box is then filled with molten lead, which is allowed to cool and solidify. Two counter ballast tubes (not shown) are then constructed from Aluminum tubing having a diameter of 4.1 cm, and a length of 25.4 cm. These are secured through the ballast box with bolts, washers and nuts. Lead shot will be added to these tubes when the boom is constructed and mounted on the yoke assembly so as to counterbalance the boom arm.

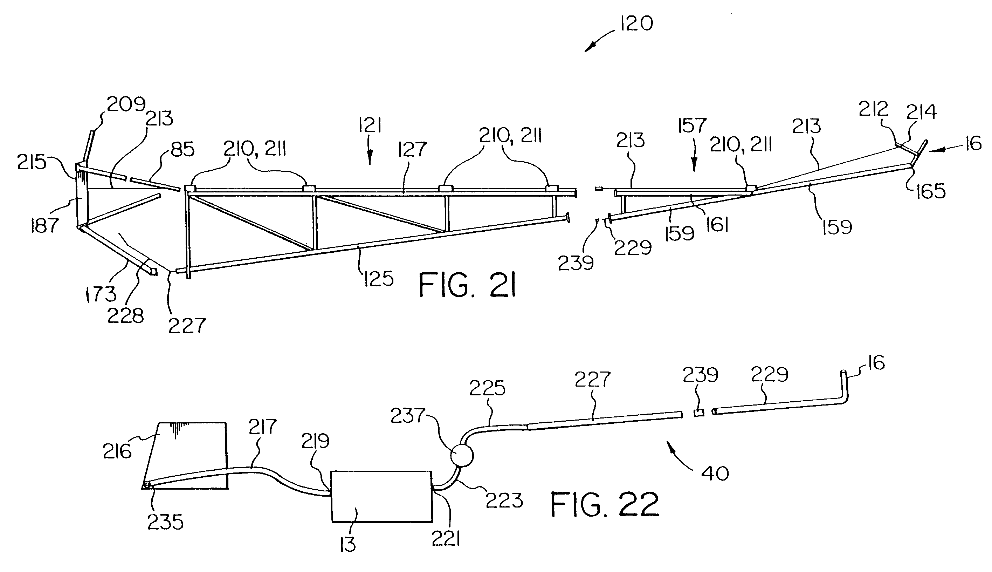

The control arm **85** is fashioned from a piece of Aluminum tubing that is bent into a gentle "U" shape, and is attached to the ballast box **187** and bulkhead **149**, and is illustrated on Figure 21. This control arm allows the operator of the boom to swing the boom both horizontally and vertically. The control arm **85** connects the middle of side **154** of the bulkhead **149** to the end **189** of ballast box **187**. When arm **85** is pulled, the bulkhead pivots on shaft **117** and outboard end **12** is lifted, while when arm **85** is pushed, end **12** is lowered. By moving the arm to the right or left, this movement displaces the bulkhead and the shaft **117** of the yoke, so that the spindle yoke assembly rotates.

### The boom stow assembly 22

The boom stow assembly **22**, illustrated in Figs. 20a-c, is designed to keep the boom securely stowed while the helicopter is in transit. Assembly **22** is constructed by joining a latch sub-assembly **191** to a boom stow stem **193**, as shown in Figure 20a.

An example of the latch sub-assembly **191** is shown in Figures 20b and 20c to comprise two "C" plates **194**. Two 6 mm holes **195** and **196** are drilled in each piece. A spacer web **197** is manufactured from a piece of Aluminum measuring 2.8 cm in width and 63 cm in length. A slot **198** measuring 6 mm in width and 2.5 cm in length is then milled into the exact centre of the spacer web **197**. The spacer web is then bent into a "C" shape so as to match the outer curve of the "C" plates **194**. The spacer web is then welded to the two "C" plates to form the hollow structure shown in Figures 20b and c.

A latch arm **199** is manufactured according to the example illustrated on Figure 20a, from a solid piece of Aluminum with a height of 19 mm, a width of 2.8 cm, and a length of 13 cm. The latch arm **199** is provided with an attachment hole **200** with a diameter of 6 mm. The hole **200** is necessary for attaching the latch arm of the latch subassembly **191** in hole **196**, so that the latch arm **199** may swing freely when connected to the latch subassembly. One end of a torsion spring (not illustrated) is attached into hole **196** at the hollow space inside the latch subassembly by means of a hex headed bolt, a washer, and a self locking nut. The other end of the torsion spring is then connected to the latch hole **195** so that the spring is constantly pushing the latch arm **199** closed against the latch subassembly.

A cord attachment hole **201** with a diameter of 6 mm is drilled through the latch arm **199** for attaching a latch cord, which allows the operator to unlatch the boom assembly **11** from the boom stow assembly.

The boom stow stem **193** is preferably manufactured from a tubular aluminum pipe **203** having a diameter of 5 cm. from a length of pipe measuring 55.9 cm is cut. A second length of pipe **204** measuring 24.1 cm is then cut, and this length is cut in half along its longitudinal axis so as to form two semi-circular pieces of pipe 24.1 cm in length, which are then welded to one end of the first length **203** so as to stiffen it, forming a semi-stiffened stem assembly. A third length of pipe **205**, measuring 20.3 cm is then cut, and is also cut along its long axis so as to form two semi-circular pieces of pipe 20.3 cm in length. These pieces are then welded to the semi-stiffened stem assembly as indicated in Figure 20a, so that the weld between the first and second lengths **203** and **204** is offset by 90 degrees from the weld between the second and third lengths **204** and **205**.

Saddle shells **207** are manufactured from two Aluminium piece 19/17 cm, which are rounded and form a cylindrical portion, for surrounding the port landing skid **3** of the helicopter, and two wings for securing the shells to each other.

The larger end **206** of the boom stow stem **193** is cut to fit onto the saddle shell **207**, to which it is then welded to at a 20 degree angle, as indicated in Figure 20a. The other end **208** of the stiffened stem assembly is cut at a 23 degree angle, and a notch is cut into the end so as to allow the latch sub-assembly to fit firmly into the stiffened stem assembly **193**. The latch sub-assembly **191** is welded to the boom stow stem **193** so that it is at a 23 degree angle from the stem, and so that all parts are of the same electrical potential.

### The nozzle control means

A control lever system allows the operator to change the angle of the nozzle **16** at the end of the boom arm, allowing water to be sprayed at an angle into the interior of insulators, more effectively cleaning them.

The control lever system is shown in Fig. 21. The control lever system comprises a control lever **209**, a nozzle control shaft **212** clamped to nozzle **16**, a control tube **213** running between the lever **209** and shaft **214** and a path for directing the tube along the boom. The path comprises 5 control slides, each including a bushing **210** and a bushing block **211**. Preferably, a bushing **210** is constructed from Aluminum tubing having a inner diameter of 13 mm and a length of 7.6 cm. A bushing block **210** having a diameter of 13 mm and a length of 7.6 cm is constructed from a solid nylon rod. A core having a diameter of 1 cm is milled out of the centre of the blocks. The blocks **211** are then inserted inside the bushings **210** so that the ends of the bushing blocks are flush with the bushings, creating a control slide. The control slides are then welded to one of the upper longerons **127** and **161** of the boom arm as shown in Fig. 21.

The nozzle control shaft **212** is clamped to the centre of the nozzle **16** at the end of the boom arm. The outboard part of the control tube **213** is constructed from aluminum tubing having a diameter of 9.5 mm and a length of 304.8 cm, and this is run through the bushing block **211** of the control slides attached on the outboard section **157**. Two 6 degree bends are made by had to the tube **213** at 25 cm from either side of the point where the tube **213** passes through the control slide to allow easy passage of the tube through the control slide. A 5 mm hole **214** is drilled in the end of the nozzle control shaft **212**. The nozzle control shaft **212** is joined to the control tube **213** by means of a bolt, nut, and washer.

The inboard part of the control tube **213** is constructed from Aluminum tubing 9.5 mm in diameter and 365.8 cm in length, and a hole is drilled through the control tube at the onboard end. The control tube is positioned through the bushing blocks **211** of the four control slides on the inboard section **121** of the boom arm.

The control lever **209** is preferably constructed from Aluminum tubing 13 mm in diameter and 20.3 cm in length, and a 5 mm hole is drilled into one end. The control lever **209** is bolted to the end of the control tube **213** by running a bolt through the holes, through the lever and the control tube and securing the bolt with a nut and a washer. The control lever is then mounted to the ballast box **187** with a swivel clamp (not visible on Figure 21) which allows the control handle to be freely pulled backwards and pushed forwards. When the control lever is moved in this fashion, the Aluminum tubing **213** moves freely through the core of the bushing blocks **211**, pulling or pushing on the nozzle, and in this manner the effective angle that the water exits the boom arm can be controlled.

### The power drive mount and the fluid circuit

The fluid circuit will be described in the following in further detail, reference being made to Figures 21 and 22. The fluid circuit comprises the pumping means **13** for driving the fluid to circulate from the fluid storage tank **216** to the nozzle **16**, the first supply tubing **217** between the storage tank and the pumping means, a rigid tube **227**, **229** inserted through the lower longerons **125** and **159** respectively, ending with the nozzle **16** at the outboard end **12** of the boom assembly **11**, and a second supply tube **223**, **225** for connecting the pump to the rigid tube.

The first supply tubing **217** is attached to a camlock fitting **235** located on the right hand side panel of the onboard tank **216**, and this is connected to the suction connection side **219** of the pump. The second supply tubing **223** runs underneath the external work platform **1**, and is attached between the discharge side **221** of the pump and a solenoid **237** that isracketed onto the boom arm **11**. A flexible hose **225** having 30.5 cm in length then connects the solenoid **237** to the rigid onboard water supply tube **227** that is constructed from Aluminum tubing 9.5 mm in diameter and 393.7 cm in length. This inboard tube **227** is inserted through the inside of the inboard lower longeron **125**, and a gentle bend **228** is made at the end of the tube which exits onto the counterweight portion of the inboard section of the boom arm so that the tube **227** is flush with the lower strut **173**, as illustrated in Figure 21. The tube **227** is then connected to the hose **225**.

The rigid outboard water supply tube **229** is constructed from Aluminum tubing 9.5 mm in diameter and 289.6 cm in length. This tube **229** is then inserted through the inside of the lower longeron **159**. A 90 degree angle compression fitting made of brass is attached to the end of the tube, so that the fitting sticks out of the notch **165** in the end of the longeron **159**. This compression fitting is then connected to a brass swivel, which is connected to a brass female 90 degree angle compression fitting, which is in turn connected to the brass nozzle **16** having a 9.5 mm in diameter and 20.3 cm in length.

The cleaning fluid delivery system is assembled by first inserting the rigid tubing in the outboard and inboard sections. The tubes are joined together by use of a tube connector **239**. The outboard section **157** is then bolted to the inboard section **121** by joining the ring flanges of the outboard section flush to the ring flanges of the inboard section, and bolting them together by passing bolts through the holes in the ring flanges and securing them with washers and nuts. As a result, the entire boom arm should have the same electrical potential.

The pumping means **13** comprises a pump, a pump engine and a fuel tank for the pump engine (not shown). The fuel tank may be customer-made to have a diameter of 15.2 cm and a length of 30.5 cm. The fuel tank is secured to the power/drive mount **44** by means of a clamp.

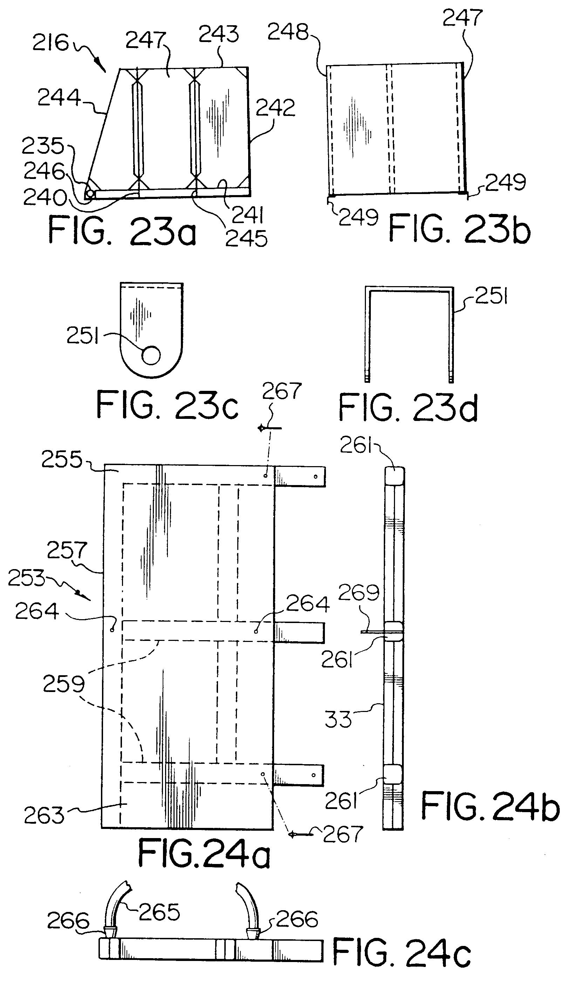

The fluid storage tank **216** is preferably customer made, as illustrated in Figures 23a to 23d. The fluid storage tank is constructed from a sheet of Aluminum having a width of 68.6 cm and a length of 261.6 cm which is bent to form the perimeter of the tank, namely the top, bottom, back and a front faces of the fluid tank. For example, a first bend at a 90 degree angle is made 79.4 cm from one end of the sheet to form bottom face **241**, and a second bend is made at a 90 degree angle 61 cm from the first bend, so as to produce the back face **242**. A final bend is made 61 cm from the second bend at an angle which allows the two ends of the sheet to touch, forming the top face **243** and the front face **244**.

A right hand side panel **247** and left hand side panel **248** are constructed with a trapezoidal shape so as to form the left and right panels flush with the perimeter of the fuel tank. The fluid exits the tank through the camlock fitting **235**. To this end, a hole with a diameter of 2.5 cm is drilled into the right side panel close to the sharp angle of the trapeze, and a nipple is then inserted into this hole and welded. The camlock fitting **235** is then screwed onto the nipple.

A large and a small supports **240**, **245** are welded to the bottom **241** for supporting a false bottom **246**. The first large support **240** is made from a "Z" bar measuring 66 cm in length and 8.9 cm in height, which is bent twice at a 90 degree angle along its short axis so as to produce two equal arms having a width of 19 mm connected by a central portion with a height of 2.5 cm. The second small support **245** measures 66 cm in length and 8.3 cm in height, and is then bent twice along its short axis so as equal arms having a width of 19 mm connected to a central portion with a height of 4.4 cm. The false bottom **246** is constructed from a sheet of Aluminum having a width of 68.6 cm and a length of 78.1 cm. A 90 degree angle bend is made 3.8 cm from the long end of this piece to produce a sheet measuring 74.3 cm in length and 68.6 cm in width with a 3.8 cm arm. This is then welded to the fuel tank and Z supports wherever it comes into contact with them.

The tank is supported on the helicopter floor by four angle anchors **249** which are "L" shaped pieces with a height of 2.5 cm, a width of 2.5 cm, and a length of 5 cm. A drill hole is made in each piece. The anchors **249** are welded to the left and right hand side panels as shown in Figure 23b.

Four fittings **251** are then made in accordance with Figures 23c and d. The floor of the helicopter is made of ribbed sheet metal, and the fittings are slid overtop the ribs on the floor of the helicopter. The onboard fluid storage tank is positioned inside the helicopter on the fittings, which are aligned so that they are directly underneath the angle anchors **249.** The fittings **251** are then attached to the floor of the helicopter by passing a bolt through the fitting and the floor of the helicopter, and then securing the bolt with a washer and nut. The fluid storage tank **216** is then secured to the fittings **251** by running structural steel screws through the anchor channel holes, and the fittings **251**, and securing the screws with washers and nuts. Once this is done, the fluid tank **216** is of the same electrical potential as the helicopter.

### The electrical controls

The controls of the invention are electrically powered from the 28V electrical system of the helicopter. This power flow is converted into a 12V flow by a converter, and is finally changed to a 120V flow by passing through an inverter. When a trigger fixed on the control arm **85** of the boom assembly **11** is depressed, electrical current flows from the inverter to the solenoid **237** illustrated in Figure 22, causing it to open and thus allowing fluid to move into the fluid delivery system, and be directed onto the target.

The fluid delivery system may be shut down at any time by means of a parallel shutdown system consisting of two kill switches, one controlled by the pilot, and one controlled by the operator. When a kill switch is pressed, the flow of power to the system is cut. This causes an engine relay contact to open, stopping the pump engine from operating. Accordingly, the pump stops, and fluid ceases moving through the fluid delivery system.

### The wing assembly

As mentioned above, the work platform may also be used for repairing the high voltage transmission lines. When in the repair mode, a wing is attached to the platform at the front of the port side, while the power drive mount is installed at the starboard side for counterbalancing the weight of the operator. The operator seats on the wing facing forward, with his legs dangling over the edge, and is secured with a seat belt assembly (not shown).

The wing assembly is illustrated in Figures 24a and 24b . The wing assembly **253** is constructed from 5 cm square Aluminum tubing. A forward beam **255** measuring 58.4 cm in length has one end cut at a 45 degree angle. An outside lateral beam **257** having a length of 91 cm has one end cut at a 45 degree angle, and this is welded to the forward beam to produce an "L" shape. Two stub tubes **259** measuring 53.3 cm in length are then cut from the Aluminum tubing. The wing is then positioned near the port edge intercostal **33**, and the stub tubes **259** are positioned so as to line up with the stub tube housing assemblies **261**. The stub tubes are then welded to the "L" shape so produce an "E" shape that may be slid in and out of the stub tube housing assemblies **261**. Lateral supports are then cut to span the distance between forward beam and lateral supports, and these are welded into place. A sheet of Aluminum **263** having 91 cm in length and 45.7 cm wide is welded to the upper surface of the rectangular box, so that the entire wing assembly is of the same electrical potential. Two holes having a diameter of 1.6 cm are then drilled through the central stub tube **259**, and a hollow bushing having a length of 6 cm is inserted into this hole and is welded into place. A seat belt assembly **265** is then attached to the bushings so as to allow a workman to be securely fastened to the wing assembly.

As shown in Fig. 24c, with the wing assembly **253** placed inside of the stub tube housing **261**, a 6 mm hole **266** is drilled completely through the Aluminum mesh, stub tube housing **261** and stub tubes **259**, so that when the wing is attached to the platform **1**, it may be secured in place by dropping three pip pins **267** into the holes **266**, locking the wing in place. A bonding strap made of braided steel having a width of 3 mm and a height of 6 mm is then attached between the wing assembly and the work platform so as to ensure that both are of the same electrical potential.

### The seat assembly

As mentioned, for inspecting the high voltage transmission lines or the like, the helicopter flies besides and above the line having the inspector seated in a seat attached at the port side of the helicopter, locking closely at the lines.

The operators seat **19** is attached to the helicopter at the port rear cargo door area, as illustrated in Fig. 25a to 25d, so as to allow the operator to control the boom while securely seated. The operators seat is attached to the aircraft by means of a seat adapter plate **272** constructed from a plate of Aluminum 28.6 cm long and 33 cm wide. The seat adapter plate is attached to a seat support **20** (see also Figures 1b, 2b and 3b) constructed from 19 mm x 19 mm Stainless Steel tubing designed to act as a base for mounting the seat, a support the operators legs, and be its own method of attachment to the aircraft.

The seat support base **273** has a "C" shape and is fashioned from two lengths of tubing **274** connected by a piece of tubing **276**. The lengths **274** are each 28.6 cm long, and have one end **275** cut at a 45 degree angle on the horizontal. Piece **27**6 has 12 cm in length and both ends of this piece are cut at a 45 degree angle so that when this piece is inserted between the other two lengths **274**, they fit together into a "C" shape **273** having a width of 12 cm and a length of 28.6 cm. These pieces are then welded together. A length of tubing **277** having a length of 8.3 cm is cut, and is inserted into the "C" shape **273** so that it is 7 cm from the open end of the "C" shape, and is welded into place. The two lengths **274** protruding past this piece **277** then have their ends trimmed at a 45 degree angle on the vertical.

A footrest plate **21**, shown in Figures 26a to 26c and also in Figures 1b, 2b, and 3b, supports the operators legs when he is seated on the seat. The footrest is manufactured from a Steel Plate 3 mm thick, 22.9 cm wide, and 33 cm long. This plate is bent along its length, 3.8 cm from either end, to produce a "C" shape consisting of a base **278** which is 15.2 cm wide and 33 cm long, with two arms **279** measuring 3.8 cm in width and 33 cm in length. Two notches **281** measuring 19 mm x 19 mm are then cut from the base **278** of the "C" at either end of the same bend, so that one arm will be adjacent to two notches **281**, while the other arm will be adjacent to none. Both arms **279** are then bent 9.5 mm from the ends so as to create two channels **282** that are 2.9 cm wide.

Two footrest support legs **283** are constructed from 19 mm x 19 mm square stainless steel tubing.

For fixing the footrest plate **21** to seat support **271**, a vertical support leg **284** is provided to the operator's right side and the forward part of the aircraft, and an angular support leg **285** is provided to the operator's left side and the rear part of the aircraft, from the operator's position, seated in his seat and looking out of the port side of the aircraft.

The footrest support legs **286** are each constructed from a 15.2cm length of tubing that has one end cut at a 45 degree angle and is joined to a 5.5cm length of tubing which also has one end cut at a 45 degree angle. These pieces are positioned so that when the cut ends are joined together they form an "L" shape, and these pieces are then welded together.

A hole **289** having 5mm in diameter is drilled on each "L" for mounting the footrest **276** to the vertical support leg **284** and the Angular Support Leg **285**.

Preferably, the vertical support leg **284** is constructed from a 46cm length of tubing **284** that has one end cut at a 45 degree angle. The angular support leg **285** is constructed from three pieces of tubing, namely a 6.5cm length of tubing **292** which has one end cut at a 45 degree angle and the other end cut at a 60 degree angle opposing at 90 degrees; a second length of tubing **293**, which is 21.7cm long and has both ends cut at a 60 degree angle; and a third piece **294** having 27.5cm in length and having one end cut at a 60 degree angle. These pieces are assembled by joining the corresponding angles to form an "offset" of 28.3cm and welding the joints.

An intercostal support **291** is constructed from 19mm x 19mm square tubing 26.4cm in length. This support **291** is placed between the vertical support leg **284** and the angular support leg **285** forming a "C" shape and allowing the support legs to extend beyond the intercostal support by 10.5cm. These three pieces are then welded into position.

The vertical support leg **284** and the angular support leg **285** are welded to the open end of the seat support base **273** where the open end of the "C" shape made up of the two lengths **274** which protrude past piece **277**. The matching 45 degree angles are placed to form a 90 degree angle and welded into position.

The footrest plate **278** is positioned channel side down, so the notches **281** are on the right hand side of the plate, towards the helicopter. The footrest support legs **286** are inserted one into each notch **281**, so the long end of the leg fits inside the channel of the far arm. The footrest plate is then welded to footrest support legs.

Mounting holes 5mm in diameter **295**, **296**, **297**, and **298** are drilled on the vertical and angular support legs **284** and **285**. These holes are drilled through center beginning at the bottom of each leg at 3.5 cm spaced vertically a 3.75cm center to center.

The footrest assembly is then bolted to the vertical and angular support legs matching holes **289** to the holes **295**, **296**, **297**, or **298**, as required to accommodate the operator's height by means of two structured steel screws **301**, washers **302**, and nuts **303**. The seat adapter plate is also bolted to the seat assembly base by means of four structural steel screws **304**, washers **305**, and nuts **306**.

A Pin **311** is manufactured from a stainless steel rod having a diameter of 17 mm, and a length of 7 cm. This is welded to the vertical support Leg **284** so the centre of the pin **311** is 5.7 cm from the seat support bas**e 273**. A hole **312** 5 mm in diameter is drilled vertically through the pin 6 mm from its end. The completed seat assembly may now be attached to the helicopter. The pin is designed to be inserted into a pre existing hole on the helicopter that is a fixed point for the attachment of a step. The pin is kept in position by dropping a step pin **313** through the base plate, through a pre-existing hole in the floor of the helicopter, and through the hole **312** in the pin.

### Best Mode For Carrying out the Invention

The Invention would be best used by first attaching the seat assembly to the aircraft and performing a detailed line inspection of the high voltage transmission lines to determine the necessity of either cleaning or maintenance. A line inspection is generally done by having the pilot fly beside and above the high voltage transmission line, and having the inspector on the seat on the port side of the aircraft look at the lines.

After the operator has viewed the high voltage transmission lines, a determination will be made as to whether the lines require maintenance, cleaning, or both. If the transmission lines require either maintenance or cleaning, then the external work platform will be attached to the skids of the helicopter. It is most convenient to leave the boom stow and saddle legs of the invention permanently mounted to the helicopter. The platform can then be either attached or removed from the helicopter by running bolts through the assembly and slide/guide attachments.

When the external work platform is used in its repair platform mode, then the external wing may be added by attaching the stubs of the wing into the stub tubes, and affixing them in place with the pip pins. The power drive mount is then attached to the starboard side of the Helicopter to counterbalance the weight of the inspector. The power drive mount is attached by aligned the pre-existing bolt holes on the power drive mount and shear panel, and then passing four bolts through these holes, and securing the bolts with washers and nuts. The workman sits facing forward on the external wing, with his legs dangling over the edge, and is secured in place with a seat belt assembly. In this manner the workman can be positioned very close to the transmission line so as to use the barehand method for repairing the high voltage transmission lines.

When the work platform is used in its hydro service system mode, the work platform is attached to the starboard side of the aircraft by bolting it to the four bolt holes on the shear panel, and connecting the pump to the onboard fluid tank. The fluid tank is filled with cleaning fluid, which in most circumstances will be water. The spindle yoke assembly is then dropped into the swivel hole on the port side of the external work platform so that the spindle yoke assembly comes into contact with the stop ring. The boom arm is then mounted on the spindle yoke assembly. Bonding straps are attached between the platform and spindle yoke assembly, spindle yoke assembly ad boom, and external work platform and helicopter to ensure that all parts of the invention are of the same electrical potential. At this point the helicopter should be counterbalanced. A hose is connected from the onboard fluid tank to the solenoid. The boom arm is then latched into the boom stow for transport.

The helicopter then flies to the work site, and hovers near the high voltage transmission lines. The operator of the boom, who is seated on the inspector's seat and secured to the helicopter with a security line, then unlatches the boom from the boom stow by using the latch cord. He is then able to swing the boom out and control its motion both vertically ad horizontally by use of the control arm on the boom stow, as well as control the angle of the nozzle by use of the control lever. When he has positioned the boom at the correct angle, he then depresses the trigger on the control arm, which opens the solenoid allowing water to be pumped through the hose located inside the lower longeron of the boom arm, to the point where it exits the nozzle, and is directed at the insulator which is cleaned by the force of the water striking it.

## Claims

1. A multipurpose repair and maintenance apparatus for aerial inspection, repair and controllable delivery of a stream of cleaning fluid to a workpiece for cleaning, comprising:
a work platform (1) defining a starboard side (17) and a port side (15), for attachment on the skids (3, 5) of an helicopter;
support means (39) provided on said port side (15) of said work platform (1) for rotatably receiving a boom assembly (12) on said work platform (1);
power drive mounting means (44) provided on said starboard side (17) of said work platform (1) for detachably fixing a pumping means (13) on said work platform (1);
means for removably fixing said work platform (1) to the skids of the helicopter such that the loads on said work platform are fully balanced; and
means for removably attaching (259, 261) an external wing to said port side of said work platform,
wherein said work platform is made of electrically conductive material and
wherein all electrically conductive parts and support means of said boom assembly, said power drive mounting means, said pumping means, and said means for removably fixing are connected to the electrically conductive parts of the helicopter to have the same electrical potential.

2. An apparatus as claimed in claim 1, further comprising
a boom assembly (11) extending from said work platform (1), said boom assembly defining an onboard and (10) and an outboard end (12);
a fluid circuit with pumping means (13) for pumping cleaning fluid through a fluid circuit from a fluid storage tank (216) to a nozzle (16) output located at said outboard end of said boom assembly;

3. An apparatus as claimed in claim 1, further comprising an external wing assembly (253) for supporting a person.

4. An apparatus as claimed in claim 1 or 3, further comprising a seat (19) and means for securing (20) said seat to the rear port cargo door area of the helicopter.

5. An apparatus as claimed in claim 1 or 3, wherein said work platform is 366 cm long, said starboard side extending 142 cm from the starboard landing skid and said port side extending 112 cm from said port side skid,

6. An apparatus as claimed in claim 2, further comprising boom actuating means (119)at said onboard end of said boom assembly, for controlling the vertical and horizontal movement of said outboard end of said boom assembly.

7. An apparatus as claimed in claims 2 further comprising nozzle control means (209-214) for adjusting the angle of said nozzle output.

8. An apparatus as claimed in claim 7, wherein said nozzle control means comprises:
a nozzle control shaft (214) clamped to said nozzle output;
a control handle (209) at said onboard end of said boom assembly for driving said nozzle control shaft (214); and
a control tube guided along said boom assembly (210,211), said control tube being fixed to said nozzle control shaft at one end, and to said control handle at the other end.

9. An apparatus as claimed in claim 2, wherein said fluid circuit further comprises:
supply tubing (217) between said storage tank and said pumping means;
a rigid tube (227,229) inserted through a longeron (125, 159) of said boom assembly between said onboard end and said outboard end of said boom assembly;
a nozzle at said nozzle output, said nozzle being provided on a portion of said rigid tube extending through said longeron at said outboard end forming said nozzle output; and
a flexible hose (223,225) connecting said pumping means to said rigid tube.

10. An apparatus as claimed in claim 6, wherein said boom assembly (11) comprises:
a boom (120) including three longerons (125,127) arranged to define a rigid fusto-pyramidal structure reinforced with a plurality of reinforcing stays (129,139), for transmitting the motion of said onboard end to said outboard end; and
a triangular bulkhead (149) at said onboard end of said boom for holding the ends of said longerons, one of said longerons accommodating a rigid tube (221,229) for conducting the cleaning fluid form said onboard end to said outboard end of said boom assembly.

11. An apparatus as claimed in claim 10, wherein each of said longerons comprises an onboard segment (121) and an outboard segment (157) and means for detachably coupling said onboard segment to said outboard segment.

12. An apparatus as claimed in claim 2 or 10, further comprising a counterweight assembly (171) comprising:
three bars (173,175) joined at a common end (177), each bar being connected with a free end (179,183) to an onboard end of a respective longeron (125 , 127) ; and
a ballast box (187) joined to said common end (177) for counterbalancing the weight of said boom assembly.

13. An apparatus as claimed in claim 10, further comprising:
a spindle-yoke assembly (119) at said onboard end of said boom assembly coupled with said bulkhead (143) for allowing said onboard end (10) of said boom assembly (11) to rotate in a horizontal and in a vertical plane, and
a control arm (85) for driving the vertical and horizontal rotation of said spindle-yoke assembly.

14. An apparatus as claimed in claim 6, wherein said boom actuating means comprises:
a spindle (89) for cooperation with said support means (39), said spindle enabling rotation of said onboard end of said boom assembly in a horizontal plane;
a yoke (91) including a base (107) fixed on said spindle for rotation therewith, two diverging support arms (91) and a shaft (117) between said support arms, said shaft being coupled with said bulkhead (154) for enabling rotation of said onboard end in a vertical plane; and
a control arm (85) for driving the vertical and horizontal rotation of said yoke.

15. An apparatus as claimed in claim 2, said support means (39) further comprising means (115) for restricting the rotation of said boom in the horizontal plane to a predetermined sector.

16. An apparatus as claimed in claim 1, wherein said means for removably fixing said work platform comprises saddle legs (9) for mounting on the landing skids of an helicopter and means (53,61,63) for attaching said work platform to said saddle legs.

17. An apparatus as claimed in claim 2, further including a boom stow assembly (22) for keeping said boom assembly securely stowed while the helicopter is in transit.

18. An apparatus as claimed in claim 17, wherein said boom stow assembly comprises a latch subassembly (191) and a boom stow stem (193) on the port skid of the helicopter.

19. An apparatus as claimed in claim 16, wherein said attaching means are slide-guide attachments (59,61,63) provided on said work platform and placed such as to obtain equal distribution of the loads on said work platform when attached to the helicopter landing skids.

20. An apparatus as claimed in claim 19, wherein said slide-guide attachments enable fine displacement of the work platform when mounted on said saddle legs, for fine adjustment of the position of said work platform on the helicopter skids.

## Patentansprüche

1. Mehrzweckreparatur- und -wartungsvorrichtung für die Luftinspektion, die Reparatur und die steuerbare Abgabe eines Reinigungsfluidstroms auf ein Werkstück, zum Reinigen, aufweisend:
eine Arbeitsplattform (1), die eine Steuerbordseite (17) und eine Backbordseite (15) definiert, zur Befestigung auf den Gleitkufen (3, 5) eines Hubschraubers;
Tragmittel (39), die auf der Backbordseite (15) der Arbeitsplattform (1) vorgesehen sind, um eine Auslegereinheit (12) auf der Arbeitsplattform (1) drehbar aufzunehmen;
Kraftantriebs-Montagemittel (44), die auf der Steuerbordseite (17) der Arbeitsplattform (1) vorgesehen sind, um das Pumpmittel (13) auf der Arbeitsplattform (1) abnehmbar zu befestigen;
Mittel, um die Arbeitsplattform (1) an den Gleitkufen des Hubschraubers abnehmbar zu befestigen, und zwar so, daß die Lasten auf der Arbeitsplattform voll ausbalanciert sind; und
Mittel (259, 261), um einen externen Flügel an der Backbordseite der Arbeitsplattform abnehmbar zu befestigen,
wobei die Arbeitsplattform aus elektrisch leitendem Material besteht, und wobei alle elektrisch leitenden Teile und Tragmittel der Auslegereinheit, der Kraftantriebs-Montagemittel, des Pumpmittels,
und der Mittel zum abnehmbaren Befestigen mit den elektrisch leitenden Teilen des Hubschraubers verbunden sind, damit sie das gleiche elektrische Potential haben.

2. Vorrichtung wie in Anspruch 1 beansprucht, weiterhin aufweisend
eine Auslegereinheit (11), die von der Arbeitsplattform (1) ausgeht, wobei die Auslegereinheit ein Bordende (10) und ein Außenbordende (12) definiert;
einen Fluidkreis mit einem Pumpmittel (13), um Reinigungsfluid von einem Fluidspeichertank (216) über einen Fluidkreis nach dem Ausgang einer Düse (16) zu pumpen, der bei dem Außenbordende der Auslegereinheit gelegen ist;

3. Vorrichtung wie in Anspruch 1 beansprucht, die weiterhin eine externe Flügeleinheit (253) aufweist, um eine Person zu tragen.

4. Vorrichtung wie in Anspruch 1 oder 3 beansprucht, die weiterhin einen Sitz (19) und Mittel (20) aufweist, um den Sitz an der Fläche der hinteren Backbord-Frachttür des Hubschraubers zu befestigen.

5. Vorrichtung wie in Anspruch 1 oder 3 beansprucht, wobei die Arbeitsplattform 366 cm lang ist, die Steuerbordseite sich 142 cm über die Steuerbord-Landekufe hinaus erstreckt, und die Backbordseite sich 112 cm über die Backbordseiten-Kufe hinaus erstreckt.

6. Vorrichtung wie in Anspruch 2 beansprucht, die weiterhin Auslegerbetätigungsmittel (119) an dem Bordende der Auslegereinheit aufweist, um die vertikale und horizontale Bewegung des Außenbordendes der Auslegereinheit zu steuern.

7. Vorrichtung wie in Anspruch 2 beansprucht, die weiterhin Düsensteuermittel (209-214) aufweist, um den Winkel des Düsenausgangs einzustellen.

8. Vorrichtung wie in Anspruch 7 beansprucht, wobei die Düsensteuermittel aufweisen:
eine Düsensteuerwelle (214), die an dem Düsenausgang festgeklemmt ist;
einen Steuergriff (209) an dem Bordende der Auslegereinheit, um die Düsensteuerwelle (214) zu steuern; und
ein Steuerrohr, das längs dieser Auslegereinheit geführt wird (210, 211), wobei das Steuerrohr am einen Ende an der Düsensteuerwelle, und am anderen Ende an dem Steuergriff befestigt ist.

9. Vorrichtung wie in Anspruch 2 beansprucht, wobei der Fluidkreis weiterhin aufweist:
eine Zuführungs-Rohrleitung (217) zwischen dem Speichertank und dem Pumpmittel;
ein starres Rohr (227, 229), das zwischen dem Bordende und dem Außenbordende der Auslegereinheit in einen Längsholm (125, 159) eingesetzt ist;
eine Düse bei dem Düsenausgang, wobei die Düse in einem Bereich des starren Rohrs vorgesehen ist, der sich bei dem Außenbordende, das den Düsenausgang bildet, durch den Längsholm erstreckt; und
einen flexiblen Schlauch (223, 225), der das Pumpmittel mit dem starren Rohr verbindet.

10. Vorrichtung wie in Anspruch 6 beansprucht, wobei die Auslegereinheit (11) aufweist:
einen Ausleger (120), der drei Längsholme (125, 127) umfaßt, die so angeordnet sind, daß sie eine durch eine Vielzahl von Verstärkungsstreben (129, 139) verstärkte, starre, pyramidenstumpfförmige Struktur bilden, um die Bewegung des Bordendes nach dem Außenbordende zu übertragen; und
eine dreieckige Trennwand (149) an dem Bordende des Auslegers, um die Enden der Längsholme festzuhalten, wobei in einem der Längsholme ein starres Rohr (221, 229) untergebracht ist, um das Reinigungsfluid von dem Bordende nach dem Außenbordende der Auslegereinheit zu leiten.

11. Vorrichtung wie in Anspruch 10 beansprucht, wobei jeder der Längsholme einen Bordabschnitt (121) und einen Außenbordabschnitt (157) aufweist, und Mittel aufweist, um den Bordabschnitt mit dem Außenbordabschnitt abnehmbar zu kuppeln.

12. Vorrichtung wie in Anspruch 2 oder 10 beansprucht, die weiterhin eine Gegengewichteinheit (171) aufweist, aufweisend:
drei Stangen (173, 175), die an einem gemeinsamen Ende (177) zusammengefügt sind, wobei jede Stange bei einem freien Ende (179, 183) mit einem Bordende eines jeweiligen Längsholms (125, 127) verbunden ist; und
eine Ballastbox (187), die mit dem gemeinsamen Ende (177) zusammengefügt ist, um das Gewicht der Auslegereinheit zu kompensieren.

13. Vorrichtung wie in Anspruch 10 beansprucht, weiterhin aufweisend:
eine mit der Trennwand (149) gekuppelte Spindel-Gabel-Einheit (119) an dem Bordende der Auslegereinheit, um dem Bordende (10) der Auslegereinheit (11) zu ermöglichen, sich in einer horizontalen und einer vertikalen Ebene zu drehen; und
einen Steuerarm (85), um die vertikale und horizontale Drehung der Spindel-Gabel-Einheit zu steuern.

14. Vorrichtung wie in Anspruch 6 beansprucht, wobei die Auslegerbetätigungsmittel aufweisen:
eine Spindel (89), um mit den Tragmitteln (39) zusammenzuwirken, wobei die Spindel die Drehung des Bordendes der Auslegereinheit in einer horizontalen Ebene ermöglicht;
eine Gabel (91), umfassend eine Basis (107), die an der Spindel befestigt ist, zwecks Drehung mit der Spindel, zwei divergierende Tragarme (109), und eine Welle (117) zwischen den Tragarmen, wobei die Welle mit der Trennwand (154) gekuppelt ist, um eine Drehung des Bordendes in einer vertikalen Ebene zu ermöglichen; und
einen Steuerarm (85), um die vertikale und horizontale Drehung der Gabel zu steuern.

15. Vorrichtung wie in Anspruch 2 beansprucht, wobei die Tragmittel (39) weiterhin Mittel (115) aufweisen, um die Drehung des Auslegers in der horizontalen Ebene auf einen vorgegebenen Sektor zu beschränken.

16. Vorrichtung wie in Anspruch 1 beansprucht, wobei die Mittel, um die Arbeitsplattform abnehmbar zu befestigen, Sattelbeine (9) zum Anbringen auf den Landekufen eines Hubschraubers, und Mittel (59, 61, 63) zum Befestigen der Arbeitsplattform an den Sattelbeinen aufweisen.

17. Vorrichtung wie in Anspruch 2 beansprucht, die weiterhin eine Ausleger-Verstaueinheit (22) umfaßt, um die Auslegereinheit sicher verstaut zu halten, wenn der Hubschrauber auf dem Transport ist.

18. Vorrichtung wie in Anspruch 17 beansprucht, wobei die Ausleger-Verstaueinheit eine Sperrklinken-Untereinheit (191) und einen Ausleger-Verstauschaft (193) auf der Backbord-Gleitkufe des Hubschraubers aufweist.

19. Vorrichtung wie in Anspruch 16 beansprucht, wobei die Befestigungsmittel Gleitführungsbefestigungen (59, 61, 63) sind, die auf der Arbeitsplattform vorgesehen sind, und so angeordnet sind, daß eine gleichmäßige Verteilung der Lasten auf der Arbeitsplattform erhalten wird, wenn die Arbeitsplattform an den Hubschrauber-Gleitkufen befestigt ist.

20. Vorrichtung wie in Anspruch 19 beansprucht, wobei die Gleitführungsbefestigungen eine feine Verschiebung der Arbeitsplattform ermöglichen, wenn die Arbeitsplattform auf den Sattelbeinen angebracht ist, zwecks Feineinstellung der Position der Arbeitsplattform auf den Hubschrauber-Gleitkufen.

## Revendications

1. Appareil de réparation et d'entretien polyvalent pour le contrôle aérien, la réparation et la fourniture contrôlable d'un jet de liquide de nettoyage à une pièce pour nettoyage, comprenant :
une plate-forme de travail (1) définissant un côté tribord (17) et un côté bâbord (15), pour la fixation des patins (3, 5) d'un hélicoptère;
un moyen de support (39) prévu sur ledit côté bâbord (15) de ladite plate-forme de travail (1) pour recevoir en rotation un ensemble de mât (12) sur ladite plate-forme de travail (1);
un moyen de montage motorisé (44) installé sur ledit côté tribord (17) de ladite plate-forme de travail (1) pour fixer de manière amovible un moyen de pompage (13) sur ladite plate-forme de travail (1);
des moyens pour fixer de manière amovible ladite plate-forme de travail (1) aux patins de l'hélicoptère de telle sorte que les charges sur ladite plate-forme de travail soient totalement équilibrées; et
des moyens (259, 261) pour fixer de manière amovible une aile extérieure audit côté bâbord de ladite plate-forme de travail,
dans lequel ladite plate-forme de travail est fabriquée en matériau électriquement conducteur et
dans lequel toutes les parties électriquement conductrices et le moyen de support dudit ensemble de mât, ledit moyen de montage motorisé, ledit moyen de pompage, et lesdits moyens pour fixation amovible sont raccordés aux parties électriquement conductrices de l'hélicoptère pour avoir le même potentiel électrique.

2. Appareil selon la revendication 1, comprenant en outre
un ensemble de mât (11) s'étendant de ladite plate-forme de travail (1), ledit ensemble de mât définissant une extrémité à bord (10) et une extrémité hors bord (12);
un circuit hydraulique avec un moyen de pompage (13) pour pomper du liquide de nettoyage à travers un circuit hydraulique d'un réservoir de stockage de liquide (216) jusqu'à une sortie à buse (16) située à ladite extrémité hors bord dudit ensemble de mât;

3. Appareil selon la revendication 1, comprenant en outre un ensemble d'aile extérieure (253) pour supporter une personne.

4. Appareil selon la revendication 1 ou 3, comprenant en outre un siège (19) et un moyen de fixation (20) dudit siège à la zone de la porte de chargement arrière bâbord de l'hélicoptère.

5. Appareil selon la revendication 1 ou 3, dans lequel ladite plate-forme de travail a une longueur de 366 cm, ledit côté tribord s'étendant de 142 cm à partir du patin d'atterrissage tribord et ledit côté bâbord s'étendant de 112 cm à partir dudit patin bâbord.

6. Appareil selon la revendication 2, comprenant en outre un moyen de commande de mât (119) à ladite extrémité à bord dudit ensemble de mât, pour commander le mouvement vertical et horizontal de ladite extrémité hors bord dudit ensemble de mât.

7. Appareil selon la revendication 2, comprenant en outre des moyens de commande de buse (209 à 214) pour ajuster l'angle de ladite sortie de buse.

8. Appareil selon la revendication 7, dans lequel lesdits moyens de commande de buse comprennent :
un axe de commande de buse (214) fixé sur ladite sortie de buse;
une poignée de commande (209) à ladite extrémité à bord dudit ensemble de mât pour commander ledit axe de commande de buse (214); et
un tube de commande guidé sur ledit ensemble de buse (210, 211), ledit tube de commande étant fixé audit axe de commande de buse à une extrémité, et à ladite poignée de commande à l'autre extrémité.

9. Appareil selon la revendication 2, dans lequel ledit circuit hydraulique comprend en outre :
une tubulure d'alimentation (217) entre ledit réservoir de stockage et ledit moyen de pompage;
un tube rigide (227, 229) introduit dans un longeron (125, 159) dudit ensemble de mât entre ladite extrémité à bord et ladite extrémité hors bord dudit ensemble de mât;
une buse à ladite sortie de buse, ladite buse étant installée sur une partie dudit tube rigide s'étendant dans ledit longeron à ladite extrémité hors bord formant ladite sortie de buse; et
un tuyau flexible (223, 225) raccordant ledit moyen de pompage audit tube rigide.

10. Appareil selon la revendication 6, dans lequel ledit ensemble de mât (11) comprend :
un mât (120) comprenant trois longerons (125, 127) disposés de manière à définir une structure rigide en tronc de pyramide renforcée par une pluralité d'entretoises de renfort (129, 139), pour transmettre le mouvement de ladite extrémité à bord à ladite extrémité hors bord; et
une cloison triangulaire (149) à ladite extrémité à bord dudit mât pour tenir les extrémités desdits longerons, un desdits longerons recevant un tube rigide (221, 229) pour diriger le liquide de nettoyage de ladite extrémité à bord à ladite extrémité hors bord dudit ensemble de mât.

11. Appareil selon la revendication 10, dans lequel chacun desdits longerons comprend un segment à bord (121) et un segment hors bord (157) et des moyens pour accoupler de manière amovible ledit segment à bord dudit segment hors bord.

12. Appareil selon la revendication 2 ou 10, comprenant en outre un ensemble à contrepoids (171) comprenant :
trois barres (173, 175) accouplées à une extrémité commune (177), chaque barre étant attachée par une extrémité libre (179, 183) à une extrémité à bord d'un longeron correspondant (125, 127); et
un caisson d'équilibrage (187) rattaché à ladite extrémité commune (177) pour contrebalancer le poids dudit ensemble de mât.

13. Appareil selon la revendication 10, comprenant en outre :
un ensemble axe-étrier (119) à ladite extrémité à bord dudit ensemble de mât accouplé à ladite cloison (149) pour permettre la rotation de ladite extrémité à bord (10) dudit ensemble de mât (11) dans un plan horizontal et dans un plan vertical; et
un bras de commande (85) pour commander la rotation verticale et horizontale dudit ensemble axe-étrier.

14. Appareil selon la revendication 6, dans lequel ledit moyen de commande de mât comprend :
un axe (89) coopérant avec ledit moyen de support (39), ledit axe permettant la rotation de ladite extrémité à bord dudit ensemble de mât dans un plan horizontal;
un étrier (91) comprenant un socle (107) fixé sur ledit axe pour une rotation simultanée, deux bras supports divergents (109) et un axe (117) entre lesdits bras supports, ledit axe étant couplé à ladite cloison (154) pour permettre la rotation de ladite extrémité à bord dans un plan vertical; et
un bras de commande (85) pour commander la rotation verticale et horizontale dudit étrier.

15. Appareil selon la revendication 2, ledit moyen de support (39) comprenant en outre un moyen (115) pour limiter la rotation dudit mât dans le plan horizontal à un secteur prédéterminé.

16. Appareil selon la revendication 1, dans lequel lesdits moyens pour fixer de manière amovible ladite plate-forme de travail comprennent des pattes de fixation (9) pour montage sur les patins d'atterrissage d'un hélicoptère et des moyens (59, 61, 63) pour fixer ladite plate-forme de travail auxdites pattes de fixation.

17. Appareil selon la revendication 2, comprenant en outre un ensemble d'arrimage de mât (22) pour maintenir ledit ensemble de mât fermement arrimé lorsque l'hélicoptère est en déplacement.

18. Appareil selon la revendication 17, dans lequel ledit ensemble d'arrimage de mât comprend un sous-ensemble de verrouillage (191) et un bras d'arrimage de mât (193) sur le patin bâbord de l'hélicoptère.

19. Appareil selon la revendication 16, dans lequel lesdits moyens de fixation sont des fixations à glissière (59, 61, 63) installées sur ladite plate-forme de travail et placées de manière à obtenir une répartition uniforme des charges sur ladite plate-forme lorsque fixée aux patins d'atterrissage de l'hélicoptère.

20. Appareil selon la revendication 19, dans lequel lesdites fixations à glissière permettent un déplacement précis de la plate-forme de travail lorsque montée sur lesdites pattes de fixation, pour un ajustement précis de la position de ladite plate-forme sur les patins de l'hélicoptère.
